# EUROPÄISCHE PATENTSCHRIFT

(11) **EP 3 632 569 B1**
(45) Veröffentlichungstag und Bekanntmachung des Hinweises auf die Patenterteilung: **03.11.2021**
(21) Anmeldenummer: 19195552.5
(22) Anmeldetag: 05.09.2019
(51) Int. Cl.: B01L 7/00, B01L 3/00

(54) **TEMPERIERBLOCKMODUL UND VORRICHTUNG ZUR THERMISCHEN BEHANDLUNG VON PROBEN**
TEMPERATURE CONTROL BLOCK MODULE AND DEVICE FOR THERMAL PROCESSING OF SAMPLES
MODULE DE BLOC DE MISE EN TEMPÉRATURE ET DISPOSITIF DESTINÉS AU TRAITEMENT THERMIQUE DES ÉCHANTILLONS

(30) Priorität: 02.10.2018 DE 102018124412
(43) Veröffentlichungstag der Anmeldung: 08.04.2020
(73) Patentinhaber: Biometra GmbH, 37079 Göttingen (DE)
(72) Erfinder: Appel, Eggert, 37139 Adelebsen (DE); Junghans, Janek, 37085 Göttingen (DE); Missal, Konstantin, 34125 Kassel (DE)
(74) Vertreter: Andres, Angelika Maria

(56) Entgegenhaltungen:
- EP-A1- 1 088 590
- DE-A1- 10 115 848
- DE-T2- 69 826 834
- US-A1- 2016 016 163

## Beschreibung

Die Erfindung betrifft ein Temperierblockmodul, insbesondere für eine Vorrichtung zur thermischen Behandlung von Proben. Die Erfindung betrifft weiter eine Vorrichtung zur thermischen Behandlung von Proben und ein Verfahren zum Entnehmen einer auf einem Temperierblock aufgesetzten Mikrotiterplatte mit einer Vielzahl von Reaktionsgefäßen aus einer Vorrichtung zur thermischen Behandlung von Proben.

Eine derartige Vorrichtung kann beispielsweise ein Thermocycler sein. Solche Geräte werden dazu verwendet, Proben einem vorgegebenen Temperaturverlauf auszusetzen, beispielsweise zur Inkubation oder zur Durchführung der Polymerase-Kettenreaktion (PCR), die in der Regel in einer Vielzahl von Zyklen erfolgt, in denen die Proben mit DNA-Polymerase zunächst aufgeheizt und dann wieder abgekühlt werden. Der Temperierblock kann eine Vielzahl von Aufnahmen für Reaktionsgefäße aufweisen. Diese Aufnahmen können als Vertiefungen in einer Oberfläche des Temperierblocks ausgestaltet sein. Die Reaktionsgefäße können als in einer Mikrotiterplatte gebildete Aufnahmen, z.B. in Form von Näpfchen (englischer Fachbegriff: Microwells), ausgestaltet sein. Die Näpfchen können beispielsweise als Einsenkungen der Mikrotiterplatte gebildet sein, die in entsprechende Aufnahmen im Temperierblock eingreifen können, wenn die Mikrotiterplatte auf dem Temperierblock aufgesetzt ist. Es gibt aber auch Mikrotiterplatten, z.B. die sog. 1536-Mikrotiterplatten, bei denen die Reaktionsgefäße durch eine Wabenstruktur auf einer planen Grundfläche ausgebildet sind. Zur Temperierung von in solchen Mikrotiterplatten enthaltenen Proben wird ein Temperierblock mit planer Oberfläche verwendet, die rückseitig gegen die Grundfläche der Mikrotiterplatte anliegt, wenn die Mikrotiterplatte auf dem Temperierblock aufgesetzt ist. Es gibt Thermocycler, die dazu ausgestaltet sind, Reaktionsgefäße durch einen Deckel in festen thermischen Kontakt mit dem Temperierblock anzudrücken. Hierzu muss eine Anpresskraft gegen den Deckel aufgebracht werden. Für die In-situ-PCR bzw. Hybridisierung sind außerdem Objektträger bekannt, bei denen die Probe auf einen jeweils durch einen von einer Einfassung umgebenen Oberflächenbereich aufgebracht wird. Solche auf Objektträgern aufgebrachte Proben können ebenfalls in Thermocyclern thermisch behandelt werden.

Einzelne in Thermocyclern anwendbare Reaktionsgefäße oder Mikrotiterplatten mit einer Vielzahl von Reaktionsgefäßen bestehen häufig aus einem Kunststoff. Bei Durchführung von Reaktionen bei vergleichsweise hohen Temperaturen können die in Kontakt mit dem Temperierblock eingesetzten Mikrotiterplatten am Temperierblock anhaften ("anbacken"), so dass sie nachfolgend nur gegen einen gewissen Widerstand wieder vom Temperierblock gelöst werden können. Vor allem bei automatisiert ablaufenden Prozessen, bei welchen derartige Behältnisse nicht manuell, sondern von einem automatisierten Greifarm in ihre Betriebspositionierung am Temperierblock gebracht werden und auch wieder aus der Vorrichtung entnommen werden, kann dieses Anhaften am Temperierblock zu Fehlern oder Störungen führen. Löst sich die angehaftete Mikrotiterplatte beim manuellen Herausheben oder beim Herausheben durch den Greifarm ruckartig oder nur an einzelnen Stellen vom Temperierblock, kann es zum Verlust von Probenflüssigkeit kommen: Bei offener Anwendung der Reaktionsgefäße kann dies durch Verschütten von Probenflüssigkeit geschehen. Ist die Mikrotiterplatte durch eine Dichtungsfolie oder eine Dichtungsmatte (Engl. Fachbegriff: Sealing Mat) abgedeckt, kann aufgrund der Erschütterung der Mikrotiterplatte beim Entnehmen Flüssigkeit zur Dichtungsfolie oder Dichtungsmatte gelangen und dort als Tropfen anhaften, so dass sie für die weitere Verwendung der Proben verlorengeht. In seltenen Fällen kann es auch dazu kommen, dass die Mikrotiterplatte durch das ruckartige Lösen von dem Temperierblock aus der Vorrichtung herauskatapultiert wird und herunterfällt.

Angesichts dieser Problematik sind im Stand der Technik verschiedene Auswurfmechanismen bekannt geworden, die dazu dienen sollen, das Herausheben von Reaktionsgefäßen in Form von Probenplatten aus dem Temperierblock zu unterstützen.

In WO 02/078849 A1 ist beispielsweise ein automatisch betreibbarer Thermocycler beschrieben, der einen Auswurfmechanismus für eine Mikrotiterplatte aufweist. Der Auswurfmechanismus umfasst vier zwischen einer Ruhestellung und einer Ausstoßstellung bewegbare Ausstoßorgane, die in Richtung zu ihrer Ruhestellung vorgespannt sind. Die Ausstoßorgane sind so angeordnet, dass sie bei Einsatz einer rechteckigen Mikrotiterplatte in dem Thermocycler an deren vier Ecken unterhalb eines Randbereichs der Mikrotiterplatte angeordnet sind. Um die Ausstoßorgane aus ihrer Ruhestellung in die Ausstoßstellung zu bewegen, wird ein Ausstoßschieber durch eine Rotationsbewegung eines Kipphebels von einer ersten in eine zweite Verschiebeposition bewegt und bewirkt damit gegen die Vorspannung der Ausstoßorgane eine Aufwärtsbewegung der Ausstoßorgane in die Ausstoßstellung. Bei dieser Bewegung schlagen die Ausstoßorgane gegen eine Randfläche der Mikrotiterplatte an und heben sie aus dem Temperierblock heraus. Die Bewegung des Kipphebels wird durch eine über einen Kipphebelträger mit dem Kipphebel gekoppelte Welle mittels eines Elektromotors angetrieben. Der Elektromotor treibt über die Rotationsbewegung der Welle gleichzeitig eine Schwenkbewegung des Deckels des Thermocyclers von einer geschlossenen Stellung in eine geöffnete Stellung an, so dass die Mikrotiterplatte noch während der Anhubbewegung des Deckels mittels der Ausstoßelemente aus dem Temperierblock herausgehoben wird.

Obwohl diese Vorrichtung sehr zufriedenstellend funktioniert, ist sie doch verhältnismäßig kompliziert aufgebaut und daher aufwändig in der Fertigung. Hinzu kommt, dass die Bewegung aller Ausstoßorgane zwingend gleichzeitig mit der Deckelbewegung erfolgt. Die Ausstoßorgane werden immer gleichzeitig, synchron und mit derselben Antriebskraft bewegt, die Bewegungen der Ausstoßorgane sind mithin nicht individuell steuerbar. Die Kraft, die die einzelnen Ausstoßorgane auf die Mikrotiterplatte ausüben, ist durch ihre Vorspannung und die Abmessung der Ausstoßschieber bzw. der Ausstoßorgane bestimmt. Bei hartnäckig an dem Thermocycler anhaftenden Reaktionsgefäßen können daher die weiter oben beschriebenen unerwünschten Effekte nicht immer sicher verhindert werden.

Auch aus WO 2017/048987 A1 ist eine Vorrichtung zur thermischen Behandlung von Proben bekannt, die ein Temperierblockmodul mit einem Auswurfmechanismus aufweist. Das Temperierblockmodul ist in einer durch einen Deckel verschließbaren Basiseinheit der Vorrichtung angeordnet. Der Auswurfmechanismus umfasst mehrere Auswurfelemente, die über Federn an einen Aufnahmebereich ("drip pan") des Temperierblockmoduls gekoppelt sind. An dem Temperierblockmodul ist ein quaderförmiger Temperierblock angeordnet, der zur Aufnahme einer Mikrotiterplatte eingerichtet ist. Die Auswurfelemente sind in einem den Temperierblock umgebenden Randbereich des Aufnahmebereichs entlang der Seiten des Temperierblocks angeordnet. Wird eine Mikrotiterplatte in den Temperierblock eingesetzt, schlägt ihr Randbereich gegen die Auswurfelemente an, so dass beim Schließen des Deckels die dabei vom Deckel gegen den Thermoblock angepresste Mikrotiterplatte die Auswurfelemente nach unten gegen die Federkraft bewegt. Auf diese Weise wird die Mikrotiterplatte durch die Auswurfelemente gegen den Deckel gespannt. Beim Lösen des Deckels nach erfolgter thermischer Behandlung entspannen sich die Federn und heben dabei die Mikrotiterplatte an. Dieser Mechanismus ist konstruktiv vergleichsweise einfach aufgebaut, birgt aber Risiken im Betrieb der Vorrichtung. Haftet die Mikrotiterplatte beispielsweise stark oder nur stellenweise an dem Temperierblock an, kann das Anheben der Platte beim Entspannen der Federn in unkontrollierter Weise, insbesondere ruckartig, mit den weiter oben beschriebenen unerwünschten Effekten erfolgen. Ein weiterer Nachteil besteht darin, dass die Federkräfte der Auswurfelemente beim Schließen des Deckels überwunden werden müssen. Dadurch lässt sich die Anpresskraft, mit der der Deckel im geschlossenen Zustand an die Reaktionsgefäße angedrückt wird, nicht exakt einstellen, da die Federkräfte nicht bekannt sind oder sich über die Zeit verändern können.

Aus der EP1088590A1 ist ein Thermocycler und ein Hebeelement für eine Mikrotiterplatte bekannt geworden, wobei in einigen der Sacklöcher zwischen den Vertiefungen einer Heizfläche sind Hebeelemente in Form von Spiralfedern angeordnet sind. Die Hebeelemente sind allerdings nicht individuell steuerbar. Die US2016/0016163 beschreibt generell einen Deckel für automatisierte Instrumente. Der Verschlussmechanismus basiert auf einer Rotationsbewegung und einer vertikalen Bewegung.

Es ist die Aufgabe der vorliegenden Erfindung, eine gattungsgemäße Vorrichtung zur thermischen Behandlung von Proben anzugeben, die eine sichere, insbesondere automatisiert durchgeführte, Entnahme von Probengefäßen aus der Vorrichtung nach erfolgter thermischer Behandlung erlaubt.

Diese Aufgabe wird gelöst durch das Temperierblockmodul gemäß Anspruch 1 und die Vorrichtung gemäß Anspruch 5. Die Erfindung umfasst außerdem ein Verfahren zum Entnehmen von Reaktionsgefäßen aus einer Vorrichtung zur thermischen Behandlung von Proben gemäß Anspruch 13. Vorteilhafte Ausgestaltungen sind in den abhängigen Ansprüchen angegeben.

Das erfindungsgemäße Temperierblockmodul, das insbesondere zum Einsatz in einer Vorrichtung zur thermischen Behandlung von Proben geeignet ist,
umfasst:
einen Temperierblock, mindestens ein Temperierelement, eine Wärmesenke und einen Auswurfmechanismus, der dazu dient, auf den Temperierblock aufgesetzte Reaktionsgefäße von dem Temperierblock abzuheben,
wobei der Auswurfmechanismus mindestens einen ersten Auswurfstößel und einen zweiten Auswurfstößel umfasst,
wobei der erste und der zweite Auswurfstößel in dem Temperierblockmodul senkrecht zu einer Ebene, in der der Temperierblock angeordnet ist, aus einer ersten, in das Temperierblockmodul eingefahrenen,
Stellung (Ruhestellung) in eine zweite, aus dem Temperierblockmodul ausgefahrene, Stellung (Auswurfstellung) beweglich gelagert sind,
wobei das Temperierblockmodul weiter einen ersten Stößelantrieb umfasst, der mit dem ersten Auswurfstößel zum Antreiben der Bewegung des erstens Auswurfstößels von der ersten in die zweite Stellung oder von der zweiten in die erste Stellung in Wirkverbindung steht, und wobei das Temperierblockmodul einen von dem ersten Stößelantrieb verschiedenen zweiten Stößelantrieb umfasst, der mit dem zweiten Auswurfstößel zum Antreiben der Bewegung des zweiten Auswurfstößels von der ersten in die zweite Stellung oder von der zweiten in die erste Stellung in Wirkverbindung steht, und
wobei die Bewegungen des ersten und zweiten Auswurfstößels mit unterschiedlicher Kraft, unterschiedlicher Geschwindigkeit und/oder zu unterschiedlichen Zeiten unabhängig voneinander antreibbar und steuerbar sind.

Die mit dem Temperierblockmodul verwendbaren Reaktionsgefäße können in einer Mikrotiterplatte gebildet sein. Diese kann beispielsweise eine Vielzahl von als Reaktionsgefäße dienenden Vertiefungen aufweisen. Die Mikrotiterplatte kann auch eine flache Rückseite aufweisen, wobei die Reaktionsgefäße durch eine Strukturierung auf ihrer Vorderseite gebildet sind.

Der Temperierblock kann in einer möglichen Ausgestaltung eine Vielzahl von Aufnahmen für ein oder mehrere Reaktionsgefäße aufweisen. Eine Mikrotiterplatte mit einer Vielzahl von als Reaktionsgefäße dienenden Vertiefungen kann im Betrieb des Temperierblockmoduls derart auf einen solchen Temperierblock aufgesetzt werden, dass die einzelnen Vertiefungen jeweils in eine Aufnahme des Temperierblocks eingreifen. Alternativ kann der Temperierblock eine im wesentlichen plane Oberfläche aufweisen. In diesem Fall kann im Betrieb des Temperierblockmoduls eine Mikrotiterplatte mit flacher Rückseite auf die Oberfläche des Temperierblocks aufgelegt sein.

Indem der erste und der zweite Auswurfstößel mittels verschiedener Stößelantriebe bewegt werden, können die Bewegungen der Auswurfstößel mit unterschiedlicher Kraft, unterschiedlicher Geschwindigkeit und/oder zu unterschiedlichen Zeiten unabhängig voneinander angetrieben und somit auch individuell gesteuert werden. Die Weglänge der Auswurfbewegung kann ebenfalls durch die Stößelantriebe, insbesondere individuell für jeden Auswurfstößel, vorgegeben werden, indem die Auswurfbewegung vor Erreichen der zweiten Stellung gestoppt wird. Dies gewährleistet eine wesentlich höhere Flexibilität der Auswurfbewegung der Mikrotiterplatte im Vergleich zu den aus dem Stand der Technik bekannten Lösungen. Beispielsweise können unterschiedliche, durch die automatische Bedienung der Vorrichtung vorgegebene Randbedingungen berücksichtigt werden.

In einer vorteilhaften Ausgestaltung des Temperierblockmoduls kann dieses mehrere Auswurfstößel umfassen, die zwischen der ersten und der zweiten Stellung beweglich sind, wobei das Temperierblockmodul pro Auswurfstößel einen Stößelantrieb aufweist, derart, dass jeder Stößelantrieb mit einem der Auswurfstößel zum Antreiben der Bewegung des Auswurfstößels von der ersten in die zweite Stellung und/oder von der zweiten in die erste Stellung in Wirkverbindung steht. Die Anzahl der Auswurfstößel kann gerade oder ungerade sein, vorteilhaft sind beispielsweise drei, vier oder sechs Auswurfstößel.

Die Auswurfstößel können an einer Peripherie des Temperierblocks angeordnet sein. Unter der Peripherie wird ein um den Rand des Temperierblocks verlaufender Bereich verstanden, dessen Breite so bemessen ist, dass die Auswurfstößel bezüglich einer für den Anwendungsfall vorgesehenen Mikrotiterplatte so angeordnet sind, dass die Auswurfstößel in der ausgefahrenen Stellung gegen einen unteren Randbereich der Mikrotiterplatte oder einen die Mikrotiterplatte umgebenden Rahmen von unten anschlagen. Bei einem Temperierblock mit rechteckigem Querschnitt ist es vorteilhaft, wenn die Auswurfstößel an den vier Ecken dieses Querschnitts angeordnet sind. Alternativ können die Auswurfstößel aber auch an jeweils paarweise gegenüberliegenden Seiten des Temperierblocks angeordnet sein. Vorteilhaft sind die Auswurfstößel derart angeordnet, dass sie im Betrieb, d.h. bei einer in den Temperierblock eingesetzten Mikrotiterplatte unterhalb eines keine Reaktionsgefäße umfassenden Randbereichs der Mikrotiterplatte angeordnet sind. Grundsätzlich ist es aber auch möglich, die Mikrotiterplatte mit einem Adapter in Form eines die Mikrotiterplatte umgebenden Rahmens zu versehen, dessen Umfang so bemessen ist, dass die Auswurfstößel bei in dem Temperierblock eingesetzter, mit Adapter versehener Mikrotiterplatte unter dem Adapter zu liegen kommen.

Neben dem Temperierblock weist das Temperierblockmodul mindestens ein Temperierelement und eine Wärmesenke auf. Das Temperierelement kann in Form eines oder mehrerer thermoelektrischer Elemente, z.B. eines oder mehrerer Peltier-Elemente, ausgestaltet sein.

In dieser Ausgestaltung ist das mindestens eine Temperierelement zwischen dem Temperierblock und der Wärmesenke angeordnet.

In einer vorteilhaften Ausgestaltung sind alle Auswurfstößel direkt oder indirekt über ein oder mehrere weitere Bauteile an der Wärmesenke montiert.

Die Stößelantriebe können jeweils einen Elektromotor umfassen. In alternativen Ausgestaltungen können sie als hydraulische oder pneumatische Antriebe ausgestaltet sein oder ein in seiner Längenausdehnung veränderliches Piezoelement aufweisen. Vorteilhaft sind die Stößelantriebe als Linearmotoren ausgestaltet.

Eine erfindungsgemäße Vorrichtung zur thermischen Behandlung von Proben umfasst:
eine Basiseinheit, die einen Aufnahmebereich zum Aufnehmen eines oder mehrerer Reaktionsgefäße aufweist;
ein in der Basiseinheit angeordnetes Temperierblockmodul nach einer der zuvor beschriebenen Ausgestaltungen; und
einen Deckel zum Schließen des Aufnahmebereichs, der von einer ersten, geöffneten Position in eine zweite, geschlossene Position bewegbar ist, wobei der Deckel eine Abdeckplatte enthält,
die eine Vorderfläche aufweist, wobei die Vorderfläche dazu bestimmt ist, gegen auf den Temperierblock
aufgesetzte Reaktionsgefäße eine vorgegebene Anpresskraft auszuüben, wenn sich der Deckel in der zweiten Position befindet.

Die Reaktionsgefäße können mit einer an den Reaktionsgefäßen bzw. der Mikrotiterplatte anliegenden, insbesondere selbstklebende, Dichtungsmatte oder Dichtungsfolie verschlossen sein. Eine Dichtungsmatte kann auch auf die Reaktionsgefäße aufgelegt sein. Alternativ kann eine solche Dichtungsmatte lösbar an der Abdeckplatte des Deckels befestigt sein. Die Reaktionsgefäße können in einer weiteren alternativen Ausgestaltung auch durch einen Wachspfropfen oder Verschlusskappen dicht verschlossen sein. In der zweiten Position des Deckels liegt die Vorderfläche der Abdeckplatte entsprechend der jeweiligen Ausgestaltung gegen die Reaktionsgefäße oder gegen eine zwischen der Abdeckplatte und den Reaktionsgefäßen angeordnete Dichtungsmatte oder Dichtungsfolie an, um die gewünschte Anpresskraft auf die Reaktionsgefäße auszuüben.

In einer Ausgestaltung umfasst die Vorrichtung weiter mindestens ein mit dem Deckel verbundenes Verbindungselement und einen in der Basiseinheit angeordneten Deckelantrieb, der mit dem mindestens einen Verbindungselement gekoppelt ist, um eine Bewegung des Deckels von der ersten in die zweite Position und/oder von der zweiten in die erste Position anzutreiben,
wobei der Deckelantrieb derart mit dem mindestens einen Verbindungselement gekoppelt ist, dass der Deckel mit der Abdeckplatte bei der Bewegung von der ersten in die zweite Position in einem ersten Bewegungsabschnitt von der ersten Position zunächst in eine dritte Position gebracht wird, in der die Vorderfläche der Abdeckplatte parallel zu dem Temperierblock verläuft und von diesem beabstandet ist, und dass der Deckel und die Abdeckplatte in einem darauffolgenden zweiten Bewegungsabschnitt in Richtung einer gemeinsamen Normalen der Vorderfläche und einer Ebene, in der der Temperierblock angeordnet ist, auf die Basiseinheit zu bewegt werden, bis der Deckel die zweite Position erreicht hat.

Vorteilhaft ist an dieser Ausgestaltung, dass der Deckel nicht, wie beispielsweise der Deckel der in WO 02/078849 A1 beschriebenen Vorrichtung, über ein Scharniergelenk mit der Basiseinheit verbunden ist, und somit nicht in einer Schwenkbewegung um ein solches Gelenk geschlossen oder geöffnet wird. Damit wird vermieden, dass von der Abdeckplatte beim Schließen oder Öffnen des Deckels Scherkräfte, d.h. Kräfte mit einer horizontalen Kraftkomponente, auf im Temperierblock angeordnete Reaktionsgefäße ausgeübt werden. Solche Scherkräfte können sich nachteilig auswirken, wenn eine die Reaktionsgefäße umfassende Mikrotiterplatte durch eine Dichtungsmatte abgeschlossen und abgedichtet ist, die zwischen dem Deckel und der Mikrotiterplatte eingepresst wird. Durch die horizontale Kraftkomponente kann sich die Dichtungsmatte insbesondere im Randbereich aufwellen oder verschieben, so dass die dort befindlichen Reaktionsgefäße mangelhaft abgedichtet sind. Vielmehr wird die Abdeckplatte bei der Bewegung des Deckels von der dritten in die zweite Position in einer zu einer Ebene, in der der Temperierblock angeordnet ist, parallelen Orientierung senkrecht auf den Temperierblock und die darin enthaltenen Reaktionsgefäße abgesenkt, so dass die Vorderfläche der Abdeckplatte bei Erreichen der zweiten Position alle Reaktionsgefäße gleichzeitig erreicht und eine ausschließlich senkrecht zum Temperierblock gerichtete Kraft auf die Reaktionsgefäße ausübt. Das Verschieben oder Aufwellen einer die Reaktionsgefäße abdeckenden Dichtung, z.B. einer auf einer Mikrotiterplatte aufliegenden Dichtungsmatte, ist damit vermieden. Bei der Bewegung des Deckels in umgekehrter Richtung, also aus der zweiten in die dritte Position, beim Öffnen des Deckels ist das Auftreten von horizonten Kraftkomponenten auf die Reaktionsgefäße bzw. eine auf den Reaktionsgefäßen aufliegende Dichtungsmatte ebenfalls vermieden. Dies hilft, zusätzlich zu dem kontrollierten Anheben der Reaktionsgefäße mittels der Auswurfstößel, ruckartige Bewegungen der Reaktionsgefäße und den damit einhergehenden Verlust von Probenflüssigkeit zu vermeiden. Der Deckelantrieb, der die senkrecht zur Ebene des Temperierblocks gerichtete Bewegung des Deckels und der Abdeckplatte antreibt, kann außerdem zur variablen, und damit vorgebbaren, Einstellung einer Anpresskraft der Abdeckplatte an die Reaktionsgefäße dienen.

Unter der erwähnten Ebene, in der der Temperierblock angeordnet ist, wird hier und im Folgenden eine gedachte Ebene verstanden, die durch eine Oberfläche des Temperierblocks definiert ist. Diese Oberfläche kann eine glatte Oberfläche sein oder Aufnahmen für Reaktionsgefäße umfassen. Diese Ebene ist in der Regel, d.h. insbesondere beim bestimmungsgemäßen Gebrauch der Vorrichtung, horizontal orientiert. Die Aufnahmen können beispielsweise als Vertiefungen in der Oberfläche oder als auf die Oberfläche aufgesetzte, beispielsweise zylindrische, Aufnahmebehälter ausgestaltet sein.

Die über mindestens ein Verbindungselement realisierte Kopplung des Deckelantriebs mit dem Deckel kann vorteilhaft über zwei Verbindungselemente, z.B. Verbindungsplatten oder Verbindungsarme, realisiert sein, die an einander gegenüberliegenden Seiten des Deckels befestigt sind. Auch bei allen im Folgenden beschriebenen möglichen Ausgestaltungen kann das mindestens eine Verbindungselement in Form zweier, an einander gegenüberliegenden Seiten angeordneter Verbindungselemente ausgestaltet sein.

Der Deckelantrieb kann zur Einstellung der senkrecht zu der Vorderfläche der Abdeckplatte wirkenden Anpresskraft, die der Deckelantrieb während des zweiten Bewegungsabschnitts über das mindestens eine Verbindungselement auf den Deckel und die Abdeckplatte ausübt, steuerbar sein, so dass mittels des Deckelantriebs die Anpresskraft (bzw. ein Anpressdruck) der Vorderfläche der Abdeckplatte gegen auf den Temperierblock aufgesetzte Reaktionsgefäße einstellbar und/oder steuerbar ist.

Die Vorrichtung kann eine mit allen Stößelantrieben des Temperierblockmoduls verbundene oder verbindbare Antriebssteuerung umfassen, die dazu eingerichtet ist, beispielsweise anhand einer Vorgabe durch einen Benutzer oder einer mit der Antriebssteuerung verbundenen übergeordneten Steuerung, die Stößelantriebe unabhängig voneinander zu steuern. Die Antriebssteuerung kann ganz oder teilweise innerhalb der Basiseinheit angeordnet sein.

Der Deckelantrieb kann einen Motor, insbesondere einen Elektromotor, aufweisen. Die Antriebssteuerung kann dazu eingerichtet sein, beispielsweise anhand einer Vorgabe durch einen

Benutzer oder eine mit der Antriebssteuerung verbundene übergeordnete Steuerung, die Kraft einzustellen, die der Deckelantrieb über das mindestens eine Verbindungselement auf den Deckel und die Abdeckplatte ausübt. Hierzu kann die Antriebssteuerung einen Prozessor und Speicher umfassen, wobei in dem Speicher ein Betriebsprogramm zur entsprechenden Steuerung und Einstellung der auszuübenden Kraft abgelegt ist, und wobei der Prozessor dazu eingerichtet ist, das Programm auszuführen. Ein Benutzer oder die übergeordnete Steuerung können somit durch ein entsprechendes Signal an die Antriebssteuerung, das z.B. durch eine Eingabe des Benutzers oder automatisiert durch die Steuerung generiert werden kann, die auszuübende Kraft beliebig einstellen.

Die Antriebssteuerung und/oder die übergeordnete Steuerung können weiter dazu eingerichtet sein anhand einer vorgegebenen Kennung eines oder mehrerer in der Basiseinheit aufgenommenen Reaktionsgefäßes ein die einzustellende Kraft repräsentierendes Steuersignal zu erzeugen und an den Deckelantrieb und/oder die Motoren des Temperierblockmoduls auszugeben. Das erwähnte Betriebsprogramm kann eine entsprechende Funktionalität bereitstellen. Da es beispielsweise vorteilhaft sein kann, für die Behandlung von in unterschiedlichen Typen von Reaktionsgefäßen enthaltenen Proben unterschiedliche Anpresskräfte der Abdeckplatte gegen die Reaktionsgefäße einzustellen, erlaubt die Vorrichtung in dieser Ausgestaltung das Eingeben oder Einlesen einer Kennung der Reaktionsgefäße. Aus der Kennung kann von der Antriebssteuerung und/oder der übergeordneten Steuerung ein Steuersignal für den Deckelantrieb bzw. den Motor des Deckelantriebs erzeugt werden, um eine zu der entsprechenden Kennung passende Anpresskraft einzustellen.

Die Antriebssteuerung kann dazu eingerichtet sein, in einem ersten Betriebsmodus die Stößelantriebe derart anzutreiben, dass die Auswurfstößel zu unterschiedlichen Zeiten in die zweite Stellung bewegt und/oder wieder in die erste Stellung zurückbewegt werden. Dies erlaubt nahezu beliebige Bewegungen, z.B. eine wellenartige Bewegung, einer von den Auswurfstößeln von dem Temperierblock abgehobenen Mikrotiterplatte mittels der Auswurfstößel. Auf diese Weise wird ein sanftes, möglichst ruckfreies Herausheben der flüssigkeitsgefüllten Reaktionsgefäße aus dem Temperierblock ermöglicht.

Die Antriebssteuerung kann weiter dazu eingerichtet sein, in einem zweiten Betriebsmodus die Stößelantriebe derart anzutreiben, dass die Auswurfstößel synchron in die erste und/oder in die zweite Stellung bewegt werden.

Die Antriebssteuerung kann weiter dazu eingerichtet sein, den Deckelantrieb und die Stößelantriebe aufeinander abgestimmt derart zu steuern, dass während einer Bewegung des Deckels aus der zweiten Position in die erste Position die Auswurfstößel synchron oder nacheinander aus ihrer ersten Stellung in ihre zweite Stellung bewegt werden. Vorteilhaft können die Bewegung des Deckels und der Auswurfstößel so aufeinander abgestimmt sein, dass die Abdeckplatte die Reaktionsgefäße noch so lange mit einer Anpresskraft behaftet und somit mechanisch stabilisiert bis die Auswurfstößel ihre zweite Stellung erreicht haben. Danach bewegt sich der Deckel weiter parallel zur Ebene, in der der Temperierblock angeordnet ist, bis die dritte Position des Deckels erreicht ist. Auf diese Weise bleiben die Reaktionsgefäße so lange sicher stabilisiert, bis sie in eine Position gebracht sind, in der ein automatischer Greifarm sie sicher greifen kann.

Zur Realisierung der verschiedenen Betriebsmodi kann die Antriebssteuerung ein oder mehrere Betriebsprogramme umfassen, die die Antriebssteuerung ausführen kann, und die dazu dienen, Steuerbefehle zu erzeugen und an die Stößelantriebe bzw. ggfs. an den Deckelantrieb auszugeben, die die den in den einzelnen Betriebsmodi entsprechenden Bewegungen der Auswurfstößel bewirken.

Das den Deckel mit dem Deckelantrieb verbindende mindestens eine Verbindungselement kann mit einer in der Basiseinheit angeordneten Führung derart gekoppelt sein, dass die Bewegung des mindestens einen Verbindungselements während des zweiten Bewegungsabschnitts linear in zur Abdeckplatte senkrechter Richtung geführt ist. Der Deckelantrieb kann somit auf das Verbindungselement eine beliebig vorgebbare, senkrecht zur Vorderfläche der Abdeckplatte gerichtete Kraft ausüben, die gleichzeitig die Anpresskraft bestimmt, mit der die Vorderfläche der Abdeckplatte gegen im Temperierblock angeordnete Reaktionsgefäße gedrückt wird.

Ein Abschnitt der Führung, der die Bewegung des mindestens einen Verbindungselements während des zwischen der dritten und der zweiten Position verlaufenden zweiten Bewegungsabschnitts führt, kann senkrecht zum Temperierblock, d.h. senkrecht zu der Ebene, in der der Temperierblock angeordnet ist, verlaufen.

Der Deckelantrieb kann eine drehbare Antriebswelle umfassen, die starr mit mindestens einem sich senkrecht zu der Welle erstreckenden Hebelarm verbunden ist, wobei der Hebelarm über eine drehbar am Verbindungselement gelagerte Linearführung mit dem mindestens einen Verbindungselement gekoppelt ist. Auf diese Weise ist es möglich, einen zwischen dem Hebelarm und dem Verbindungselement eingeschlossenen Winkel bzw. einen zwischen dem Hebelarm und einer gedachten, durch die Vorderfläche der Abdeckplatte verlaufenden Ebene eingeschlossenen Winkel während der Bewegung des Deckels mit der Abdeckplatte von der ersten in die zweite Position oder in umgekehrter Richtung zu variieren.

Eine Bewegung des mindestens einen Verbindungselements während des ersten und zweiten Bewegungsabschnitts kann in einer in der Basiseinheit angeordneten Führung geführt sein. Beispielsweise kann das mindestens eine Verbindungselement mindestens ein Kopplungselement, z. B. einen Stift, aufweisen, wobei die Führung eine in der Basiseinheit angeordnete Führungsplatte umfasst, die einen Führungsschlitz aufweist, in dem das mindestens eine Kopplungselement geführt ist.

In einer vorteilhaften Ausgestaltung umfasst der Deckelantrieb ein selbsthemmendes Getriebe. Das Getriebe kann beispielsweise ein Schneckengetriebe sein. Dieses kann eine hohe Übersetzung besitzen, so dass es selbsthemmend oder quasi-selbsthemmend ist. Auch andere selbsthemmend ausgestaltete Getriebeformen sind denkbar, wobei die Selbsthemmung beispielsweise durch geeignete Materialpaarungen erzeugt sein kann. Durch die Selbsthemmung ist es möglich, die Vorrichtung derart auszugestalten, dass nach dem Erreichen der zweiten Position des Deckels, d.h. der geschlossenen Endposition des Deckels, in der die Abdeckplatte mit der vorgegebenen Anpresskraft gegen die Reaktionsgefäße anliegt, den Motor des Deckelantriebs auszuschalten, ohne dass der auf die Reaktionsgefäße wirkende Anpressdruck nachlässt. Ist das Getriebe nicht oder nicht vollständig selbsthemmend, kann die Anpresskraft durch fortgesetztes Betreiben des Motors, ggfs. mit einem geringeren Stromverbrauch im Vergleich zum Stromverbrauch beim Bewegen des Deckels zwischen der ersten und der zweiten Position, aufrechterhalten werden. Die Basiseinheit kann alternativ auch eine Feststellbremse umfassen, die die Deckelposition im geschlossenen Zustand hält, wenn das Getriebe nicht oder nicht vollständig selbsthemmend ausgestaltet ist.

Die Erfindung umfasst auch ein Verfahren zum Entnehmen einer auf einem Temperierblock aufgesetzten Mikrotiterplatte mit einer Vielzahl von Reaktionsgefäßen aus einer Vorrichtung zur thermischen Behandlung von Proben, wobei der Temperierblock Bestandteil eines Temperierblockmoduls ist, welches Temperierblockmodul einen Temperierblock, mindestens ein Temperierelement, eine Wärmesenke und einen Auswurfmechanismus umfasst,
und wobei das Temperierblockmodul in einer Basiseinheit der Vorrichtung angeordnet ist, umfassend:
Bewegen eines die Basiseinheit verschließenden Deckels mit einer Abdeckplatte entlang eines ersten Bewegungsabschnitts von einer geschlossenen Position, in der eine Vorderfläche der Abdeckplatte eine Anpresskraft gegen die Mikrotiterplatte ausübt, in eine Zwischenposition, in der die Vorderfläche der Abdeckplatte parallel zu der Mikrotiterplatte verläuft, und von dieser beabstandet ist;
Anschließend Bewegen des Deckels in eine geöffnete Position;
Bewegen mindestens eines ersten und eines zweiten Auswurfstößels, die in dem Temperierblockmodul senkrecht zu einer Ebene, in der der Temperierblock angeordnet ist, beweglich gelagert sind, aus einer ersten, in das Temperierblockmodul eingefahrenen Stellung, in eine zweite, aus dem Temperierblockmodul ausgefahrene Stellung, mittels eines ersten, den ersten Auswurfstößel bewegenden Stößelantriebs und mittels eines zweiten, den zweiten Auswurfstößel bewegenden Stößelantriebs, wobei der erste und der zweite Auswurfstößel bei der Bewegung gegen einen Rand der Mikrotiterplatte anschlagen und die Mikrotiterplatte von dem Temperierblock abheben, und
wobei die Bewegungen des ersten und zweiten Auswurfstößels (26) mit unterschiedlicher Kraft, unterschiedlicher Geschwindigkeit und/oder zu unterschiedlichen Zeiten unabhängig voneinander antreibbar und steuerbar sind.

Das Entnehmen der so abgehobenen Mikrotiterplatte von dem Temperierblock kann mittels eines automatisierten Greifarms durchgeführt werden. Es ist möglich, die Auswurfstößel, nachdem sie die zweite Stellung erreicht haben, wieder eine Teilstrecke weit in Richtung der ersten Stellung zurückzufahren, um die Mikrotiterplatte so in eine für den Betrieb des Greifarms optimale Position zu bringen.

Das Bewegen des Deckels und das Bewegen mindestens des ersten und zweiten Auswurfstößels, vorzugsweise aller Auswurfstößel, kann gleichzeitig und synchron erfolgen, derart, dass die Abdeckplatte gegen die Mikrotiterplatte anliegt, bis die Auswurfstößel die zweite Stellung erreicht haben.

Das Bewegen des Deckels kann mittels eines von einer Antriebssteuerung gesteuerten Deckelantriebs der Vorrichtung erfolgen. Die Stößelantriebe können ebenfalls von der Antriebssteuerung gesteuert werden.

Vorteilhaft werden mehrere, insbesondere drei, vier oder sechs, Auswurfstößel zum Herausheben der Mikrotiterplatte aus dem Temperierblock verwendet.

Das Verfahren kann vorteilhaft mittels einer Vorrichtung nach einer der weiter oben beschriebenen Ausgestaltungen durchgeführt werden.

In einer vorteilhaften Verfahrensvariante umfasst das Temperierblockmodul mehrere, z.B. mindestens vier Auswurfstößel, und eine Anzahl von Motoren, die gleich ist wie die Zahl der Auswurfstößel, wobei jeder Stößelantrieb mit einem der Auswurfstößel in Wirkverbindung steht, um die Auswurfstößel aus ihrer ersten Stellung in die zweite Stellung und/oder aus ihrer zweiten Stellung in die erste Stellung zu bewegen.

Die Erfindung wird im Folgenden anhand des in den Figuren dargestellten Ausführungsbeispiels näher erläutert. Es zeigen:
- Fig. 1a, b, c, d: schematische Darstellungen einer Vorrichtung zur thermischen Behandlung von Proben bei verschiedenen Positionen ihres Deckels;
- Fig. 2: eine schematische, perspektivische Schnittdarstellung eines Temperierblockmoduls der in Fig. 1a-d dargestellten Vorrichtung;
- Fig. 3a, b: schematische Längsschnitt-Darstellungen des in Fig. 2 dargestellten Temperierblockmoduls mit Auswurfstößeln in einer ersten, eingefahrenen Stellung (a) und in einer zweiten, ausgefahrenen Stellung (b);
- Fig. 4a, b, c, d, e: schematische Längsschnitt-Darstellungen der Vorrichtung gem. Fig. 1a-d bei verschiedenen Positionen ihres Deckels mit einer ersten Schnittebene;
- Fig. 5a, b: schematische Längsschnitt-Darstellungen der Vorrichtung gem. Fig. 1a-c mit einer zweiten Schnittebene; und
- Fig. 6: eine schematische Längsschnitt-Darstellung der Vorrichtung gem. Fig. 1a-c mit einer senkrecht zur ersten und zweiten Schnittebene verlaufenden dritten Schnittebene.

In den Figuren ist schematisch ein Ausführungsbeispiel für eine Vorrichtung 1 mit einem Temperierblockmodul 23 zur thermischen Behandlung von Proben, ein sogenannter Thermocycler, dargestellt. Identische Bezugszeichen bezeichnen dabei identisch ausgestaltete Elemente der Vorrichtung. Eine Vielzahl von gleich wirkenden Abwandlungen sind möglich, ohne vom Erfindungsgedanken abzuweichen.

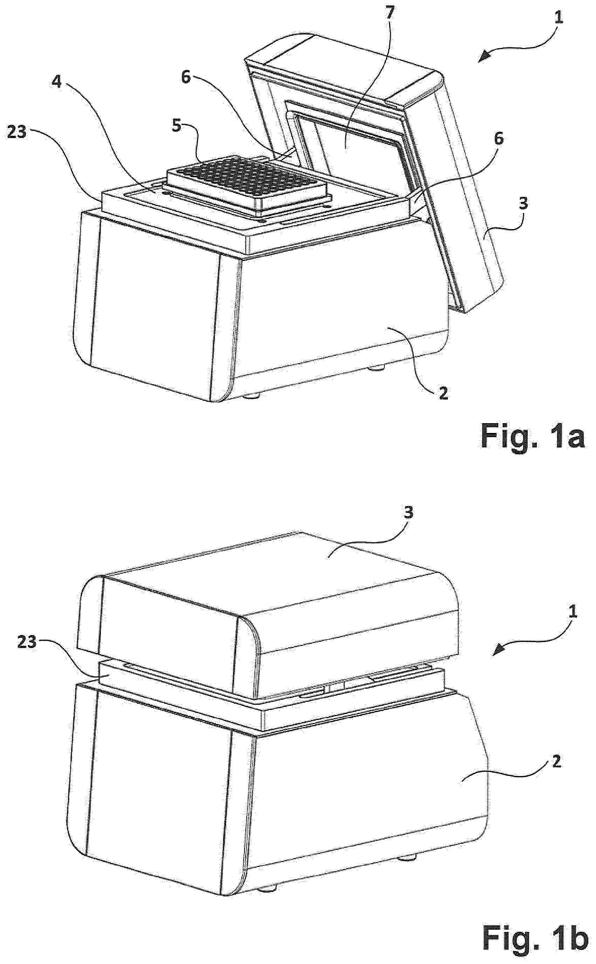

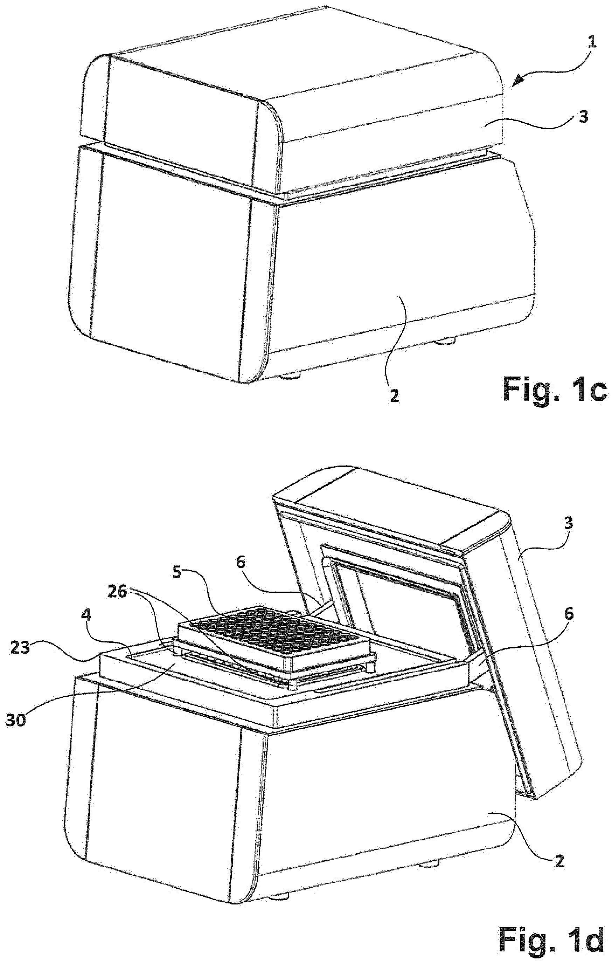

Fig. 1a-d zeigen perspektivische Ansichten der Vorrichtung 1. Sie besitzt eine Basiseinheit 2 und einen Deckel 3, der in den Fig. 1a-c in verschiedenen Positionen dargestellt ist. In der Basiseinheit ist ein Temperierblockmodul 23 mit einem Temperierblock 13 angeordnet (Fig. 1d). Das Temperierblockmodul 23 weist an seiner Oberseite einen Abdeckrahmen 30 auf, der den Temperierblock 13 freilässt. Der über dem Temperierblock 13 angeordnete Bereich bildet einen Aufnahmebereich 4, in dem Reaktionsgefäße mit thermisch zu behandelnden, flüssigen Proben angeordnet werden können. Der Temperierblock 13 ist aus einem Metall hoher Wärmeleitfähigkeit, z.B. Aluminium oder Silber, gebildet, und weist eine Vielzahl von Aufnahmen für Reaktionsgefäße auf.

In Fig. 1a, 1c und 1d ist eine im Aufnahmebereich 4 angeordnete, rechteckige Mikrotiterplatte 5 zu sehen, die eine Vielzahl von als Reaktionsgefäße dienenden Vertiefungen aufweist. Typischerweise bestehen solche Mikrotiterplatten aus Kunststoff. Im vorliegenden Beispiel ist die Mikrotiterplatte 5 so auf den Temperierblock 13 aufgesetzt, dass die in der Mikrotiterplatte 5 gebildeten, als Reaktionsgefäße dienenden Vertiefungen in die Aufnahmen des Temperierblocks 13 hineinragen. Die Aufnahmen sind im hier gezeigten Beispiel als Zylinder ausgestaltet, die aufrecht auf einer Basisfläche des Temperierblocks 13 stehen. Alternativ kann der Temperierblock 13 auch im Wesentlichen quaderförmig mit in einer seiner Oberfläche gebildeten Vertiefungen als Aufnahmen für Reaktionsgefäße oder mit einer planen Oberfläche ausgestaltet sein. Die Aufnahmen, bzw. deren obere Ränder oder Öffnungen liegen im Wesentlichen in einer horizontalen Ebene, die hier auch als diejenige Ebene bezeichnet wird, in der der Temperierblock 13 orientiert ist. Die Mikrotiterplatte 5 ist im Betrieb der Vorrichtung parallel zu dieser Ebene ausgerichtet. Liegt die Vorderfläche der beheizbaren Abdeckplatte 7 an der Mikrotiterplatte 5 an, ist sie ebenfalls parallel zu dieser Ebene ausgerichtet.

Der Deckel 3 ist über zwei Verbindungselemente 6, die im vorliegenden Ausführungsbeispiel als Verbindungsarme ausgestaltet sind, mit der Basiseinheit 2 verbunden. Die Verbindungsarme 6 sind mit einem in der Basiseinheit 2 angeordneten, im Folgenden näher zu beschreibenden Deckelantrieb gekoppelt, der den Deckel 3 zum automatischen Öffnen und Schließen der Basiseinheit 2 bewegen kann. In dem Deckel 6 ist eine beheizbare Abdeckplatte 7 angeordnet, deren zum Aufnahmebereich 4 hin weisende Vorderfläche dazu bestimmt ist, bei verschlossenem Deckel 3 gegen die in der Mikrotiterplatte 5 gebildeten Reaktionsgefäße anzuliegen.

In Fig. 1a befindet sich der Deckel 3 in einer geöffneten ersten Position, in der die Abdeckplatte 7 gegenüber der Oberfläche der Mikrotiterplatte 5 geneigt ist. In dieser Position des Deckels 3 ist ein ungehinderter Zugang zum Aufnahmebereich 4 möglich, z.B. zum Einsetzen oder Herausnehmen der Mikrotiterplatte 5. Dieses Einsetzen und Herausnehmen der Mikrotiterplatte 5 kann beispielsweise mittels eines Roboter-Greifarms erfolgen. In Kombination mit einem Roboter-Bediensystem ist die Vorrichtung 1 vollständig automatisiert betreibbar. In Fig. 1c befindet sich der Deckel 3 in einer geschlossenen zweiten Position. In dieser Position des Deckels 3 liegt die Vorderfläche der Abdeckplatte 7 mit einer vorgebbaren Anpresskraft gegen die Oberfläche der Mikrotiterplatte 5 an, so dass die Mikrotiterplatte 5 gegen den Temperierblock 13 zur gleichmäßigen Wärmeübertragung angepresst wird. Gleichzeitig verschließt die Abdeckplatte 7 die in der Mikrotiterplatte 5 gebildeten Reaktionsgefäße.

In Fig. 1b ist eine dritte Position des Deckels 3 dargestellt, die eine Zwischenposition bei der Bewegung des Deckels 3 von der ersten in die zweite Position oder auch bei der Bewegung des Deckels 3 von der zweiten in die erste Position bildet. In dieser dritten Position ist der Deckel 3 parallel zu der Mikrotiterplatte 5 bzw. zum unter der Mikrotiterplatte 5 angeordneten Temperierblock orientiert und von der Oberfläche der Mikrotiterplatte 5 beabstandet.

Die Vorrichtung 1 ist so ausgestaltet, dass eine Bewegung des Deckels 3 aus der ersten, geöffneten Position in die zweite, geschlossene Position über die dritte Position verläuft, d.h. der Deckel 3 wird in einem ersten Bewegungsabschnitt zunächst in einer bogenförmigen Bewegung aus der ersten in die dritte Position gebracht. Aus dieser dritten Position wird der Deckel 3 in einem zweiten Bewegungsabschnitt vertikal, also senkrecht zur Ebene, in der der Temperierblock orientiert ist, und damit auch senkrecht zur Oberfläche der Mikrotiterplatte 5, auf diese zu bewegt und so in die zweite, geschlossene Position gebracht.

Eine Bewegung des Deckels 3 in umgekehrter Richtung, d.h. aus der zweiten, geschlossenen Position in die erste, geöffnete Position erfolgt ebenfalls über die dritte Position, indem in einem ersten Abschnitt dieser Bewegung der Deckel 3 senkrecht zur Oberfläche der Mikrotiterplatte 5 von dieser weg bewegt wird bis er die dritte Position erreicht. In einem darauffolgenden zweiten Bewegungsabschnitt wird der Deckel 3 in einer bogenförmigen Bewegung von der dritten Position in die erste Position gebracht. Die Vorrichtung 1 weist einen Auswurfmechanismus auf, der dazu dient, die Mikrotiterplatte 5 nach Beendigung der thermischen Behandlung aus dem Temperierblock 13 herauszuheben, um einem Roboter-Greifarm das Entnehmen der Mikrotiterplatte 5 aus dem Aufnahmebereich 4 zu erleichtern. In Fig.ld sind aus dem Abdeckrahmen 30 herausragende Auswurfstößel 26 zu sehen. Im hier gezeigten Ausführungsbeispiel ist an jeder Seitenkante des quaderförmigen Temperierblocks 13, ein solcher Auswurfstößel 26 angeordnet. Die Auswurfstößel 26 können zwischen einer in das Temperierblockmodul 23 eingefahrenen Stellung (Fig. 1a) in eine aus dem Temperierblockmodul 23 ausgefahrene Stellung senkrecht zu einer Fläche, in der der Temperierblock 13 angeordnet ist bzw. senkrecht zur Oberfläche der Mikrotiterplatte 5, hin- und her bewegt werden. Bei der Bewegung von der eingefahrenen in die ausgefahrene Stellung schlagen Auswurfstößel 26 mit ihrer nach oben gerichteten Stirnfläche gegen eine Unterseite am Rand der Mikrotiterplatte 5 an und heben sie bei ihrer weiteren Bewegung bis zum Erreichen der ausgefahrenen Stellung aus dem Temperierblock 13 heraus.

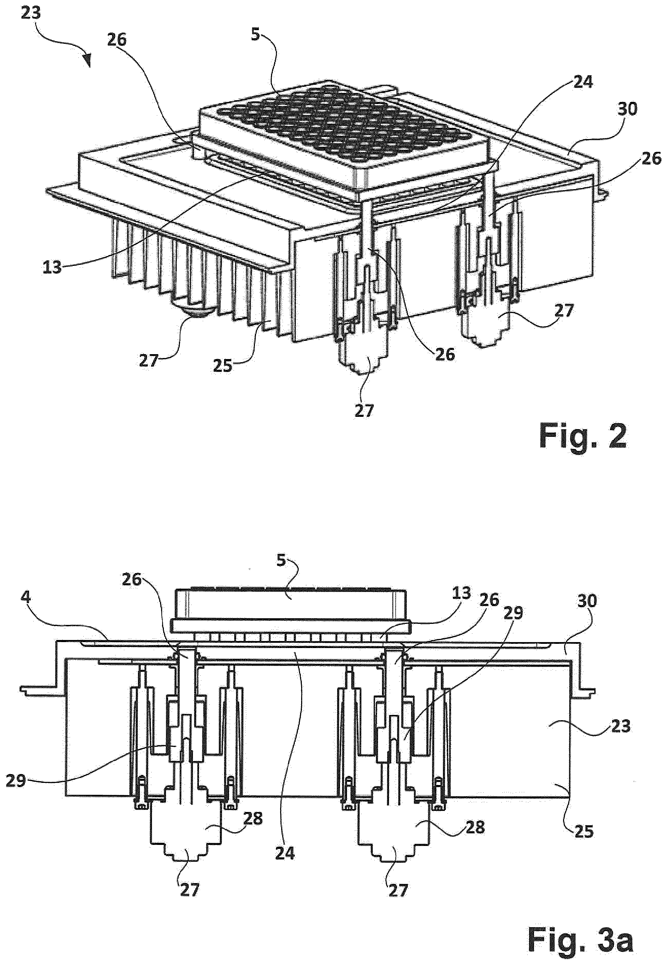

Fig. 2 zeigt eine schematische, perspektivische Längsschnitt-Darstellung des Temperierblockmoduls 23. Das Temperierblockmodul 23 ist im oberen Bereich der Basiseinheit 2 angeordnet. Es weist neben dem Temperierblock 13 eine Temperiereinrichtung mit einem oder mehreren Temperierelementen 24 und eine auf der von dem Temperierblock 13 abgewandten Seite der Temperierelemente 24 angeordnete Wärmesenke 25 auf. Die Wärmesenke 25 ist von dem Abdeckrahmen 30 überdeckt. Die Temperierelemente 24 können thermoelektrische Elemente, z.B. Peltier-Elemente, umfassen.

In der Basiseinheit 2 kann eine Steuerung vorgesehen sein, die die thermoelektrischen Elemente 24 zum Durchfahren vorgegebener Temperaturzyklen für die Durchführung von Polymerase-Kettenreaktionen steuert oder regelt. Die Temperatursteuerung kann auch mindestens teilweise in einem externen, über eine Schnittstelle des Basismoduls 2 mit den thermoelektrischen Elementen 24 verbundenen Controller realisiert sein. Die Temperatursteuerung ist in herkömmlicher Weise ausgestaltet und wird deshalb hier nicht näher beschrieben.

In dem Temperierblockmodul 23 sind im hier gezeigten Ausführungsbeispiel vier Auswurfstößel 26 angeordnet, und zwar jeweils an den Ecken bzw. Seitenkanten des Temperierblocks 13. Jedem Auswurfstößel 26 ist ein eigener Stößelantrieb 27 zugeordnet. Die Stößelantriebe 27 sind an der Wärmesenke 25 entweder direkt oder über ein oder mehrere weitere Bauteile indirekt montiert. Sie stehen mit den Auswurfstößeln 26 in Wirkverbindung, um deren Bewegung aus ihrer in das Temperierblockmodul 23 eingefahrenen in eine aus dem Temperierblockmodul 23 ausgefahrene Stellung und in umgekehrter Richtung anzutreiben.

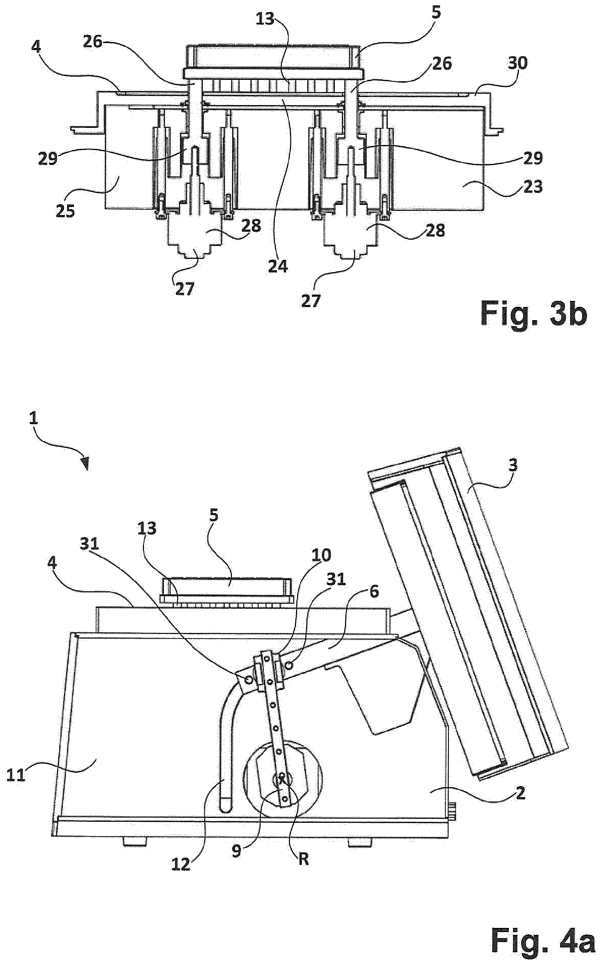

In Fig. 3a und b ist das Temperierblockmodul 23 mit dem Temperierblock 13, der darauf aufgesetzten Mikrotiterplatte 5 und zweien der vier Auswurfstößel 26 in einer Längsschnittdarstellung gezeigt.

Die Auswurfstößel 26 sind in Fig. 3a in ihrer aus dem Temperierblockmodul 23 eingefahrenen ersten Stellung und in Fig. 3b in ihrer aus dem Temperierblockmodul 23 ausgefahrenen zweiten Stellung dargestellt. Die Auswurfstößel 26 sind an der Peripherie des Temperierblocks 13 angeordnet, derart, dass die Auswurfstößel 26 bei der Bewegung aus der zurückgezogenen Stellung in die ausgefahrene Stellung an die Unterseite der Mikrotiterplatte 5 anschlagen und die Mikrotiterplatte 5 bei ihrer weiteren Aufwärtsbewegung mitnehmen. Ist die ausgefahrene Stellung der Auswurfstößel erreicht, ist die mitgenommene Mikrotiterplatte 5 so weit über den Temperierblock 13 angehoben, dass ein automatisiert betriebener Roboter-Greifarm sie leicht erfassen kann. Im vorliegenden Ausführungsbeispiel sind die Auswurfstößel 26 an den Ecken der rechteckigen Grundfläche des Temperierblocks 13 angeordnet. Es ist möglich, zusätzliche Auswurfstößel entlang der Seiten der Grundfläche vorzusehen oder nur an den Seiten Auswurfstößel vorzusehen. Selbstverständlich sind auch andere als rechteckige Grundflächen für den Temperierblock 13 denkbar. Die Auswurfstößel werden dann entsprechend an geeigneten Positionen entlang der Peripherie des Temperierblocks angeordnet.

Die Stößelantriebe 27 können als Elektroantriebe, aber auch als Pneumatik- oder Hydraulik-Antriebe ausgestaltet sein. Im vorliegenden Beispiel umfassen die Stößelantriebe 27 jeweils Elektromotor 28, der über eine eine Rotationsbewegung in eine Linearbewegung umsetzende Spindel 29 mit dem Auswurfstößel 26 gekoppelt ist. Die Stößelantriebe 27 sind individuell mittels einer Antriebssteuerung steuerbar. Eine solche, zum individuellen Betätigen der Stößelantriebe 27 ausgestaltete Antriebstriebssteuerung kann beispielsweise mindestens zu einem Teil in der Basiseinheit 2 angeordnet sein.

Mit der Antriebssteuerung ist es möglich, verschiedene Bewegungsmuster der Auswurfstößel 26 zu realisieren. Zum Beispiel können die Auswurfstößel 26 synchron bewegt werden, um die Mikrotiterplatte 5 während der Auswurfbewegung permanent in exakt waagerechter Orientierung zu halten. Es ist möglich, auch nur einzelne Auswurfstößel 26 zu bewegen.

Während der thermischen Behandlung der Probe kann das Kunststoff-Material der Mikrotiterplatte 5 am Temperierblock 13 teilweise zu fließen beginnen und an den Aufnahmen des Temperierblocks 13 anhaften. Um die flüssigkeitsgefüllten Reaktionsgefäße ohne allzu große Erschütterungen aus den Aufnahmen zu lösen, kann die Antriebssteuerung vorteilhaft dazu eingerichtet sein, die Stößelantriebe 27 derart anzusteuern, dass sie abwechselnd die ausgefahrene Stellung erreichen, so dass die Mikrotiterplatte 5 in einer pulsierenden oder wellenartigen Bewegung von dem Temperierblock 13 abgehoben wird.

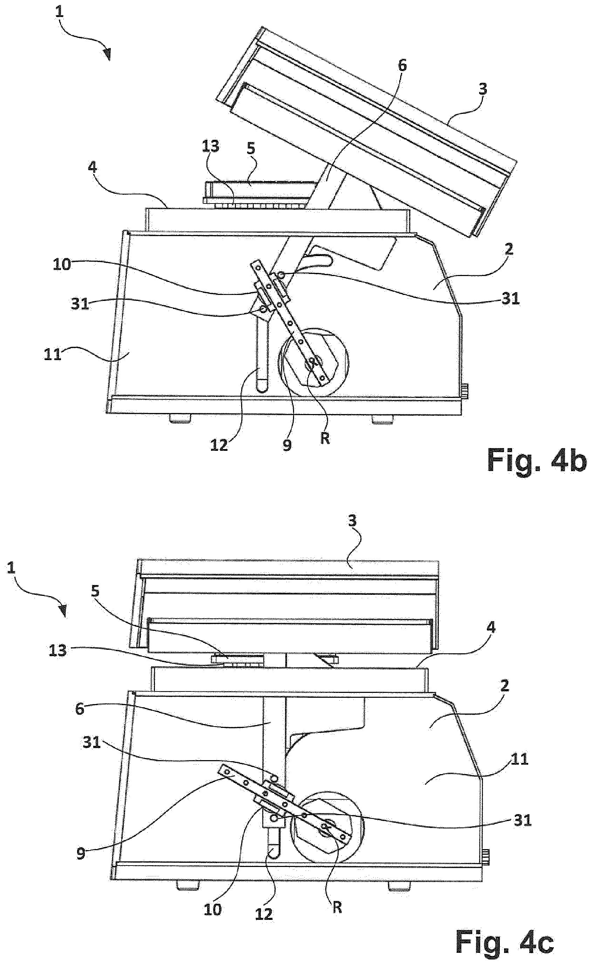

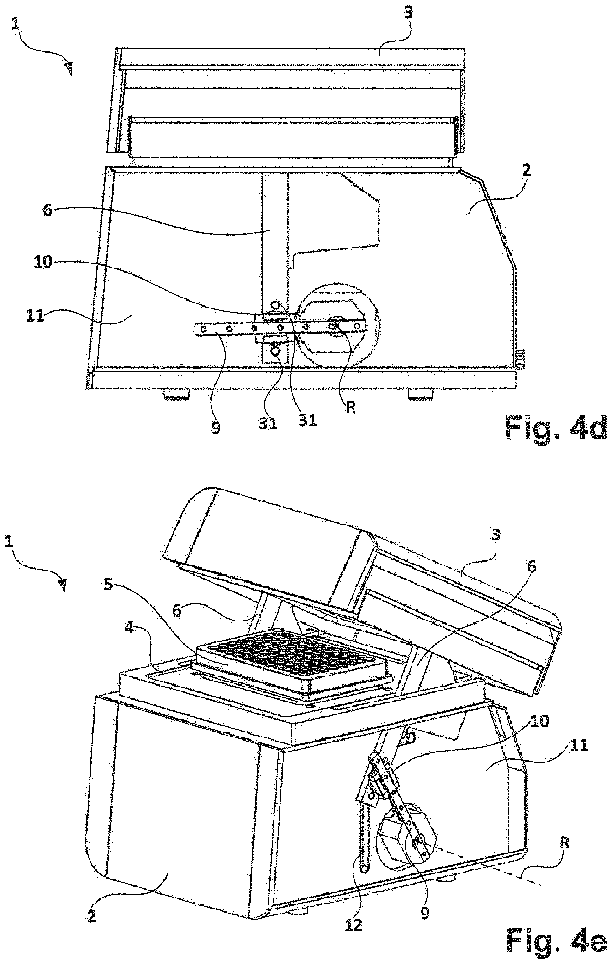

In den Fig. 4a-e ist die Vorrichtung 1 schematisch in einer Schnittdarstellung entlang einer ersten, vertikalen Schnittebene mit verschiedenen Positionen des Deckels 3 gezeigt. In dieser Darstellung ist in Fig. 4 a, b, c und e auch der Temperierblock 13 zu sehen.
In der Basiseinheit 2 ist ein Deckelantrieb 8 für die Bewegung des Deckels 3 angeordnet. Der Deckelantrieb 8 ist mit den Verbindungselementen 6 jeweils über eine Kopplungseinrichtung gekoppelt, die im Folgenden näher beschrieben wird. In der in Fig. 4a-e gezeigten Schnitt-Darstellung ist nur eine der Kopplungseinrichtungen zu sehen, die den Deckelantrieb 8 mit einem der Verbindungselemente 6 koppelt. Auf der gegenüberliegenden Seite der Basiseinheit ist eine ganz analog (symmetrisch zur hier dargestellten Kopplungseinrichtung) ausgestaltete Kopplungseinrichtung angeordnet, die den Deckelantrieb 8 mit dem auf der gegenüberliegenden Seite des Deckels angeordneten zweiten Verbindungselement 6 koppelt. Im Folgenden wird die sichtbare Kopplungseinrichtung beschrieben.

Der Deckelantrieb 8 umfasst einen Motor (in Fig. 4a-e nicht sichtbar) und eine um eine (gedachte) Rotationsachse R drehbare Antriebswelle (in Fig. 4a-e nicht sichtbar). Die Antriebswelle ist starr mit dem senkrecht zur Rotationsachse R verlaufenden Hebelarm 9 verbunden. An dem Verbindungselement 6 ist eine Linearführung 10 angeordnet, in der der Hebelarm 9 geführt ist. Die Linearführung 10 ist um eine parallel zur Rotationsachse R verlaufende (gedachte) zweite Rotationsachse drehbar an dem Verbindungselement 6 befestigt.

In der Basiseinheit 2 ist eine Führungsplatte 11 angeordnet, die senkrecht zu der Rotationsachse R der Antriebswelle orientiert ist. In der Führungsplatte 11 ist ein Führungsschlitz 12 gebildet, der einen ersten, bogenförmigen, und einen zweiten, linearen und senkrecht zu der Mikrotiterplatte 5 ausgerichteten, Abschnitt aufweist. Die durch den Deckelantrieb 8 bewirkte Bewegung des Verbindungselements 6 ist in dem Führungsschlitz 12 in der Führungsplatte 11 geführt. Hierzu weist das Verbindungselement 6 zwei Stifte 31 auf, die in dem Führungsschlitz 12 geführt sind. Wie erwähnt, befindet sich eine spiegelbildliche Kopplungsvorrichtung auf der gegenüberliegenden Seite des Deckelantriebs 8 in der Basiseinheit 2, um die Bewegung des anderen Verbindungselements 6 anzutreiben und zu führen. Anstelle der hier beschriebenen Führungen sind andere Mechanismen einsetzbar, die eine Rotationsbewegung der Antriebswelle in eine Linearbewegung der Verbindungselemente 6 umsetzen.

In Fig. 4a befindet sich der Deckel 3 in der ersten, geöffneten Position. Dabei befinden sich die Stifte 31 des Verbindungselements 6 an einem ersten Ende des Führungsschlitzes 12. Eine Drehung der Antriebswelle um die Rotationsachse R bewirkt über die Führung des Hebelarms 9 in der Linearführung 10 eine Bewegung der Stifte 31 entlang des bogenförmigen Abschnitts des Führungsschlitzes 12. Diese Bewegung resultiert in einer bogenförmigen Bewegung des Deckels 3 über die in Fig. 4b dargestellte Position. Bei dieser bogenförmigen Bewegung wird die Neigung des Deckels 3 bzw. der darin angeordneten Abdeckplatte 7 gegenüber der Ebene, in der der Temperierblock 13 angeordnet ist, immer geringer, bis der Deckel 3 und die Abdeckplatte 7 parallel zu dieser Ebene bzw. zur Mikrotiterplatte 5 ausgerichtet, aber noch von der Mikrotiterplatte 5 beabstandet sind. Damit ist der erste Bewegungsabschnitt beendet, und die dritte Position des Deckels 3 erreicht, Fig. 4c. Die weitere Bewegung der Antriebswelle bewirkt über die Linearführung 10 eine lineare Abwärtsbewegung des Verbindungselements 6 im Führungsschlitz 12, so dass sich der Deckel 3 und die darin angeordnete Abdeckplatte 7 parallel zu der Mikrotiterplatte 5 ausgerichtet in senkrechter Richtung auf die Mikrotiterplatte 5 zu bewegt, bis die Vorderfläche der Abdeckplatte 8 auf der Mikrotiterplatte 5 anschlägt. Dabei werden idealerweise keinerlei horizontale Kraftkomponenten (Scherkräfte) auf die Mikrotiterplatte 5 ausgeübt. Es besteht somit keine Gefahr, dass eine Seite der Mikrotiterplatte 5 von dem Temperierblock 13 abgehoben oder auf diesem verschoben wird.

Durch eine weitere Rotationsbewegung der Antriebswelle wird eine Anpresskraft der Vorderfläche der Abdeckplatte 7 gegen die Mikrotiterplatte 5 bewirkt. Dieser ist durch das Drehmoment der Antriebswelle bzw. durch die Kraft, die entsprechend über die Kopplungseinrichtung von dem Deckelantrieb 8 auf die Verbindungselemente 6 ausgeübt wird, vorgebbar. Liegt die Abdeckplatte 7 mit dem vorgegebenen Anpressdruck gegen die Mikrotiterplatte 5 an, ist die zweite Position des Deckels 3 (Fig. 4d) erreicht.

Die Rotationsbewegung der Antriebswelle in die entgegengesetzte Richtung bewirkt eine entsprechend in umgekehrter Richtung verlaufende, in dem Führungsschlitz 12 geführte Bewegung des Deckels 3 und der Abdeckplatte 7 von der zweiten Position über die dritte Position in die erste Position.

Alternative Ausgestaltungen der Kopplungseinheit zwischen dem Deckelantrieb 8 und den Verbindungselementen 6 bzw. dem Deckel 3 sind denkbar. So kann beispielsweise statt der Linearführung 10 für den Hebelarm 9 auch eine Kombination aus einem Führungsschlitz und einem Langloch zur Kopplung des Hebelarms 9 mit dem Verbindungselement verwendet werden.

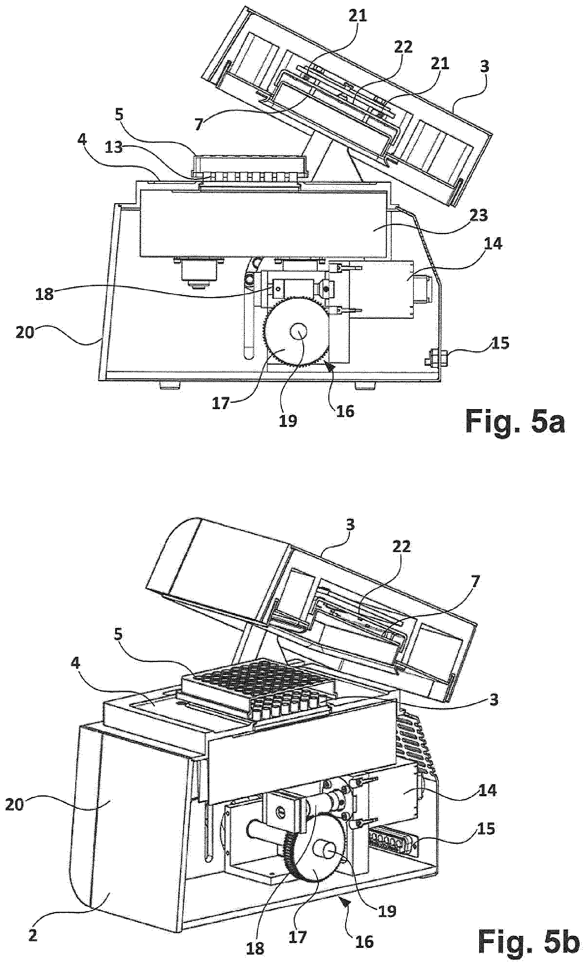

In Fig. 5a und b sind weitere schematische Schnittdarstellungen der Vorrichtung 1 gezeigt, wobei die hier betrachtete zweite Schnittebene parallel zu der ersten, in Fig. 4a-e verwendeten Schnittebene verläuft. In diesen Schnittdarstellungen ist der Deckelantrieb 8 genauer zu sehen. Der Deckelantrieb 8 umfasst einen steuerbaren Motor 14, z.B. einen Elektromotor, der mit einer in der Basiseinheit selbst oder außerhalb der Basiseinheit vorgesehenen Antriebssteuerung verbindbar ist. Zur optionalen Verbindung mit einer externen Antriebssteuerung ist in der Basiseinheit eine Schnittstelle 15 vorgesehen. Der Deckelantrieb 8 umfasst im vorliegenden Beispiel weiter ein von dem Motor 14 betätigbares, vorzugsweise selbsthemmendes, Getriebe 16. Im vorliegenden Ausführungsbeispiel ist das Getriebe 16 als Schneckengetriebe ausgestaltet, es sind jedoch auch andere Ausgestaltungen möglich, die die Drehbewegung einer Antriebswelle bewirken können. Das Getriebe 16 weist im vorliegenden Beispiel ein Zahnrad 17 (Schneckenrad) und eine schraubenförmige Schneckenwelle 18 auf, deren Drehbewegung das Zahnrad 17 in Rotation versetzt. Das Zahnrad 17 ist starr mit der oben bereits im Zusammenhang mit den Fig. 4a-e erwähnten (in Fig. 5a und b nun sichtbaren) Antriebswelle 19 verbunden, die über den Hebelarm 9, die Linearführung 10 und das in dem Führungsschlitz 12 geführte Verbindungselement 6 die Bewegung des Deckels 3 antreibt.

Die vordere Gehäusewand 20 des Gehäuses der Basiseinheit 2 ist abnehmbar ausgestaltet. Auf diese Weise ist das Innere des Gehäuses, insbesondere die Schneckenwelle 18, von außen zu Wartungs- oder Reparatur-Maßnahmen zugänglich. Für den Fall, dass der Deckel 3 nicht automatisch mittels der Antriebssteuerung geöffnet werden kann, z.B. bei einem Defekt, ist es möglich, die Schneckenwelle 18 beispielsweise mittels eines Schraubendrehers, manuell zu betätigen und so auf manuellem Weg den Deckel 3 zu öffnen, um an die Mikrotiterplatte 5 und die darin enthaltenen Proben zu gelangen.

In den Schnittdarstellungen der Fig. 5a und b ist auch der Aufbau des Deckels 3 im Detail zu sehen. Der Deckel 3 enthält, wie beschrieben, die mittels eines Heizmoduls beheizbare Abdeckplatte 7. Diese ist über Druckfedern 21 mit einem Andruckblech 22 gekoppelt, das seinerseits starr mit den Verbindungselementen 6 verbunden ist. Über die Druckfedern 21 wird die vom Deckelantrieb 8 auf die Verbindungselemente 6 ausgeübte Kraft auf die Abdeckplatte 7 übertragen. Das Heizmodul ist in herkömmlicher Weise ausgestaltet und kann über die Schnittstelle 15 der Basiseinheit 2 an eine Energieversorgung angeschlossen werden.

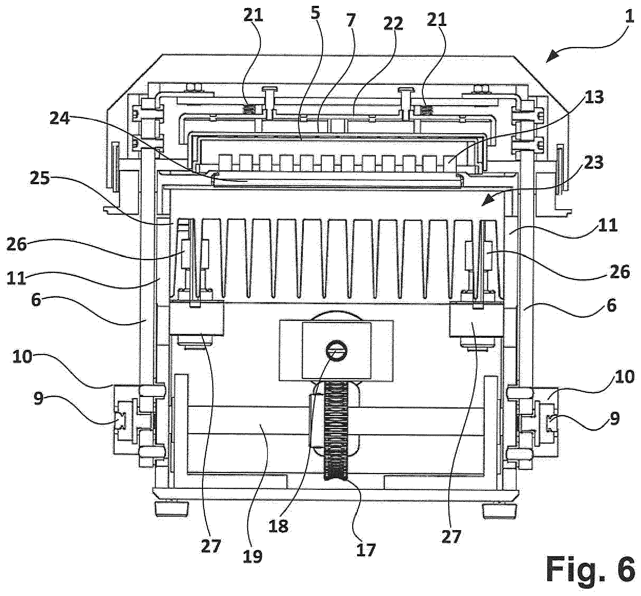

Fig. 6 zeigt eine schematische Längsschnitt-Darstellung der Vorrichtung 1 bei geschlossenem Deckel 3 (in der zweiten Position) entlang einer dritten Schnittebene, die senkrecht zu der ersten (Fig. 4a-e) und zweiten (Fig. 5a, b) Schnittebene verläuft. In dieser Darstellung ist zu sehen, dass die Kopplungseinrichtung zwischen dem Getriebe 16 und den Verbindungselementen 6 spiegelsymmetrisch bezüglich einer durch das Zahnrad 17 des Getriebes 16 verlaufenden (gedachten) Symmetrieebene ausgestaltet ist. Jedes der Verbindungselemente 6 ist mithin mit der Antriebswelle 19 über einen in einer Linearführung 10 geführten Hebelarm 9 gekoppelt, wobei die Bewegung der Verbindungselemente 6 jeweils durch einen in einem Führungsschlitz einer Führungsplatte 11 beweglichen, mit jeweils einem der Verbindungselement 6 fest verbunden Stift (nicht in Fig. 6 sichtbar) geführt ist.

Die Antriebssteuerung ist in dem hier beschriebenen, sehr vorteilhaften Ausführungsbeispiel sowohl zur Steuerung des Deckelantriebs 8 für die Bewegung des Deckels 3 als auch zur Steuerung der Stößelantriebe 27 für die Bewegung der Auswurfstößel 26 ausgestaltet. Die Antriebssteuerung kann in diesem Fall dazu ausgestaltet sein, die Bewegung des Deckels und die Bewegung der Auswurfstößel 26 nach einem vorgegebenen Betriebsprogramm aufeinander abzustimmen. So kann die Antriebssteuerung beim Anheben des Deckels 3 aus der ersten Position in die dritte Position gleichzeitig die Auswurfstößel 26 des anhand der Fig. 2 und 3a, b näher beschriebenen Auswurfmechanismus in die ausgefahrene Stellung fahren, so dass die Mikrotiterplatte 5 während sie von dem Temperierblock 13 abgehoben wird, gegen die Vorderfläche der Abdeckplatte 7 angepresst bleibt. Somit bleiben die Reaktionsgefäße während des Abhebens der Mikrotiterplatte 5 durch die Abdeckplatte 7 zusätzlich gehalten und damit gegen ruckartige Bewegungen beim Ablösen vom Temperierblock geschützt.

Zur Steuerung des Deckelantriebs 8 und der zuvor beschriebenen Stößelantriebe 27 des Auswurfmechanismus für die Mikrotiterplatte 5 kann, wie erwähnt, eine über die Schnittstelle 15 mit dem Motor 14 verbundene externe Antriebssteuerung vorgesehen sein. Es ist aber auch möglich, dass die Antriebssteuerung mindestens teilweise in der Basiseinheit 2 angeordnet ist, z.B. in Form einer Schaltung, die auf einer in der Basiseinheit 2 angeordneten Platine realisiert ist. Die Antriebssteuerung umfasst mindestens einen Prozessor, Speicherelemente und ein oder mehrere Betriebsprogramme, die in einem oder mehreren der Speicherelemente abgelegt sind und vom Prozessor ausführbar sind. Das oder die Betriebsprogramme dienen zum Betrieb und zur Steuerung der Vorrichtung 1, beispielsweise zur Steuerung des Deckelantriebs 8. Die Antriebssteuerung kann mittels eines Betriebsprogramms dazu eingerichtet sein, eine Kennung eines in den Aufnahmebereich 4 einzusetzenden Reaktionsgefäßes, z.B. einer Mikrotiterplatte 5, einzulesen, anhand der Kennung eine für das spezielle Reaktionsgefäß geeignete Andruckkraft zu ermitteln, mit der die Abdeckplatte 7 gegen das Reaktionsgefäß anliegen soll, wenn sich der Deckel 3 in der zweiten Position befindet, und den Deckelantrieb 8 zum Anlegen der ermittelten Andruckkraft zu steuern.

Gleichermaßen kann die Antriebssteuerung mittels des Betriebsprogramms dazu eingerichtet sein, die Bewegung der Auswurfstößel 26 nach einem aus mehreren möglichen Betriebsmodi ausgewählten Betriebsmodus zu bewegen, insbesondere in Abstimmung mit einer gleichzeitig erfolgenden Deckelbewegung. So kann, wie bereits erwähnt, die Antriebssteuerung die Auswurfstößel 26 in einem ersten Betriebsmodus mittels der Stößelantriebe 27 gleichzeitig und synchron betätigen, so dass alle Auswurfstößel ihre ausgefahrene Stellung gleichzeitig erreichen oder gleichzeitig in die eingefahrene Stellung bewegt werden. In einem zweiten Betriebsmodus kann die Antriebssteuerung die Auswurfstößel 26 so betätigen, dass diese nacheinander und/oder abwechselnd in ihre ausgefahrene und in ihre zurückgezogene Stellung bewegt werden, um eine pulsierende oder wellenartige Bewegung der Mikrotiterplatte zu realisieren.

Die hier beschriebene Vorrichtung ist zur automatischen Betätigung geeignet, stellt eine hohe Betriebssicherheit zur Verfügung und ist dabei platzsparend und einfach aufgebaut.

### Bezugszeichen

- 1: Vorrichtung
- 2: Basiseinheit
- 3: Deckel
- 4: Aufnahmebereich
- 5: Mikrotiterplatte
- 6: Verbindungselemente
- 7: Abdeckplatte
- 8: Deckelantrieb
- 9: Hebelarm
- 10: Linearführung
- 11: Führungsplatte
- 12: Führungsschlitz
- 13: Temperierblock
- 14: Motor
- 15: Schnittstelle
- 16: Getriebe
- 17: Zahnrad
- 18: Schneckenwelle
- 19: Antriebswelle
- 20: vordere Gehäusewand
- 21: Druckfedern
- 22: Andruckblech
- 23: Temperierblockmodul
- 24: Temperierelemente
- 25: Wärmesenke
- 26: Auswurfstößel
- 27: Stößelantrieb
- 28: Elektromotor
- 29: Spindel
- 30: Abdeckrahmen
- 31: Stift
- R: Rotationsachse der Antriebswelle

## Patentansprüche

1. Temperierblockmodul (23) für eine Vorrichtung zur thermischen Behandlung von Proben, umfassend:
einen Temperierblock (13), mindestens ein Temperierelement (24), eine Wärmesenke (25) und einen Auswurfmechanismus, der dazu dient, auf den Temperierblock (13) aufgesetzte Reaktionsgefäße von dem Temperierblock (13) abzuheben,
wobei der Auswurfmechanismus mindestens einen ersten Auswurfstößel (26) und einen zweiten Auswurfstößel (26) umfasst,
wobei der erste und der zweite Auswurfstößel (26) in dem Temperierblockmodul (23) senkrecht zu einer Ebene, in der der Temperierblock (13) angeordnet ist, von einer ersten, in das Temperierblockmodul (23) eingefahrenen, Stellung in eine zweite, aus dem Temperierblockmodul (23) ausgefahrene, Stellung beweglich gelagert sind,
wobei das Temperierblockmodul (23) weiter einen ersten Stößelantrieb (27) umfasst, der mit dem ersten Auswurfstößel (26) zum Antreiben der Bewegung des erstens Auswurfstößels (26) von der ersten in die zweite Stellung oder von der zweiten in die erste Stellung in Wirkverbindung steht, und wobei das Temperierblockmodul (23) einen von dem ersten Stößelantrieb (27) verschiedenen zweiten Stößelantrieb (27) umfasst, der mit dem zweiten Auswurfstößel (26) zum Antreiben der Bewegung des zweiten Auswurfstößels (26) von der ersten in die zweite Stellung oder von der zweiten in die erste Stellung in Wirkverbindung steht, und
wobei die Bewegungen des ersten und zweiten Auswurfstößels (26) mit unterschiedlicher Kraft, unterschiedlicher Geschwindigkeit und/oder zu unterschiedlichen Zeiten unabhängig voneinander antreibbar und steuerbar sind.

2. Temperierblockmodul (23) nach Anspruch 1,
wobei das Temperierblockmodul (23) mehrere, beispielsweise mindestens vier, Auswurfstößel (26) umfasst, die zwischen der ersten und der zweiten Position beweglich sind, und wobei das Temperierblockmodul (23) pro Auswurfstößel (26) einen Stößelantrieb (27) aufweist, derart dass jeder Stößelantrieb (27) mit einem der Auswurfstößel (26) zum Antreiben der Bewegung des Auswurfstößels (26) von der ersten in die zweite Stellung und von der zweiten in die erste Stellung in Wirkverbindung steht.

3. Temperierblockmodul (23) nach Anspruch 1 oder 2,
wobei die Auswurfstößel (26) an einer Peripherie des Temperierblocks (13), insbesondere an Ecken eines Querschnitts des Temperierblocks (13), angeordnet sind.

4. Temperierblockmodul (23) nach Anspruch 1,
wobei alle Auswurfstößel (26) direkt oder indirekt über ein oder mehrere weitere Bauteile an der Wärmesenke (25) montiert sind.

5. Vorrichtung (1) zur thermischen Behandlung von Proben, umfassend:
eine Basiseinheit (2), die einen Aufnahmebereich (4) zum Aufnehmen eines oder mehrerer Reaktionsgefäße aufweist;
ein in der Basiseinheit angeordnetes Temperierblockmodul (23) nach einem der Ansprüche 1 bis 4; und
einen Deckel (3) zum Schließen des Aufnahmebereichs (4), der von einer ersten, geöffneten Position in eine zweite, geschlossene Position bewegbar ist, wobei der Deckel (3) eine Abdeckplatte (7) enthält, die eine Vorderfläche aufweist, wobei die Vorderfläche dazu bestimmt ist, gegen auf den Temperierblock (13) aufgesetzte Reaktionsgefäße eine vorgegebene Anpresskraft auszuüben, wenn sich der Deckel (3) in der zweiten Position befindet.

6. Vorrichtung (1) nach Anspruch 5, weiter umfassend
mindestens ein mit dem Deckel (3) verbundenes Verbindungselement (6); und
einen in der Basiseinheit (2) angeordneten Deckelantrieb (8), der mit dem mindestens einen Verbindungselement (6) gekoppelt ist, um eine Bewegung des Deckels (3) von der ersten in die zweite Position und/oder von der zweiten in die erste Position anzutreiben;
wobei der Deckelantrieb (8) derart mit dem mindestens einen Verbindungselement (6) gekoppelt ist, dass der Deckel (3) mit der Abdeckplatte (7) bei der Bewegung von der ersten in die zweite Position in einem ersten Bewegungsabschnitt von der ersten Position zunächst in eine dritte Position gebracht wird, in der die Vorderfläche der Abdeckplatte (7) parallel zu dem Temperierblock (13) verläuft und von diesem beabstandet ist, und dass der Deckel (3) und die Abdeckplatte (7) in einem darauffolgenden zweiten Bewegungsabschnitt in Richtung einer gemeinsamen Normalen der Vorderfläche und einer Ebene, in der der Temperierblock (13) angeordnet ist, auf die Basiseinheit (2) zu bewegt werden, bis der Deckel (3) die zweite Position erreicht hat.

7. Vorrichtung (1) nach Anspruch 5 oder 6,
wobei der Deckelantrieb (8) zur Einstellung der senkrecht zu der Vorderfläche der Abdeckplatte (7) wirkenden Anpresskraft, die der Deckelantrieb (8) während des zweiten Bewegungsabschnitts über die Verbindungselemente (6) auf den Deckel (3) und die Abdeckplatte (7) ausübt, einstellbar und/oder steuerbar ist.

8. Vorrichtung (1) nach einem der Ansprüche 5-7,
wobei die Vorrichtung (1) eine mit allen Stößelantrieben (27) des Temperierblockmoduls (23) verbundene oder verbindbare Antriebssteuerung umfasst, die dazu eingerichtet ist, insbesondere anhand einer Vorgabe durch einen Benutzer oder einer mit der Antriebssteuerung verbundenen übergeordneten Steuerung, die Stößelantriebe (27) unabhängig voneinander zu steuern.

9. Vorrichtung (1) nach Anspruch 8,
wobei der Deckelantrieb (8) einen Motor (14), insbesondere einen Elektromotor, aufweist, und wobei die Antriebssteuerung dazu eingerichtet ist, insbesondere anhand einer Vorgabe durch einen Benutzer oder eine mit der Antriebssteuerung verbundene übergeordnete Steuerung, die Kraft einzustellen, die der Deckelantrieb (8) über das mindestens eine Verbindungselement (6) auf den Deckel (3) und die Abdeckplatte (7) ausübt.

10. Vorrichtung (1) nach Anspruch 8 oder 9,
wobei die Antriebssteuerung dazu eingerichtet ist, in einem ersten Betriebsmodus die Stößelantriebe (27) derart zu steuern, dass die Auswurfstößel (26) zu unterschiedlichen Zeiten in die zweite Stellung bewegt und/oder wieder in die erste Stellung zurück bewegt werden.

11. Vorrichtung (1) nach einem der Ansprüche 8-10,
wobei die Antriebssteuerung dazu eingerichtet ist, in einem zweiten Betriebsmodus die Stößelantriebe (27) derart anzutreiben, dass die Auswurfstößel (26) synchron in die erste und/oder in die zweite Stellung bewegt werden.

12. Vorrichtung (1) nach einem der Ansprüche 8-11,
wobei die Antriebssteuerung dazu eingerichtet ist, den Deckelantrieb (8) und die Stößelantriebe (27) aufeinander abgestimmt derart zu steuern, dass während einer Bewegung des Deckels (3) aus der zweiten Position in die erste Position die Auswurfstößel (26) synchron oder nacheinander aus ihrer ersten in ihre zweite Stellung bewegt werden.

13. Verfahren zum Entnehmen einer auf einem Temperierblock (13) aufgesetzten Mikrotiterplatte (5) mit einer Vielzahl von Reaktionsgefäßen aus einer Vorrichtung (1) zur thermischen Behandlung von Proben, wobei der Temperierblock (13) Bestandteil eines Temperierblockmoduls (23) ist, welches Temperierblockmodul (23) einen Temperierblock (13), mindestens ein Temperierelement (24), eine Wärmesenke (25) und einen Auswurfmechanismus umfasst,
und wobei das Temperierblockmodul (23) in einer Basiseinheit (2) der Vorrichtung (1) angeordnet ist,
umfassend:
Bewegen eines die Basiseinheit (2) verschließenden Deckels (3) mit einer Abdeckplatte (7) entlang eines ersten Bewegungsabschnitts von einer geschlossenen Position, in der eine Vorderfläche der Abdeckplatte (7) eine Anpresskraft gegen die Mikrotiterplatte (5) ausübt, in eine Zwischenposition, in der die Vorderfläche der Abdeckplatte (7) parallel zu der Mikrotiterplatte (5) verläuft, und von dieser beabstandet ist; anschließend Bewegen des Deckels (3) in eine geöffnete Position; und
Bewegen mindestens eines ersten und eines zweiten Auswurfstößels (26), die in dem Temperierblockmodul (23) senkrecht zu einer Ebene, in der der Temperierblock (13) angeordnet ist, beweglich gelagert sind, aus einer ersten, in das Temperierblockmodul (23) eingefahrenen Stellung, in eine zweite, aus dem Temperierblockmodul (23) ausgefahrene Stellung, mittels eines ersten, den ersten Auswurfstößel (26) bewegenden Stößelantriebs (27) und mittels eines zweiten, den zweiten Auswurfstößel (26) bewegenden Stößelantriebs (27), wobei der erste und der zweite Auswurfstößel (26) bei der Bewegung gegen einen Rand der Mikrotiterplatte (5) anschlagen und die Mikrotiterplatte (5) von dem Temperierblock (23) abheben, und
wobei die Bewegungen des ersten und zweiten Auswurfstößels (26) mit unterschiedlicher Kraft, unterschiedlicher Geschwindigkeit und/oder zu unterschiedlichen Zeiten unabhängig voneinander antreibbar und steuerbar sind.

14. Verfahren nach Anspruch 13,
wobei das Bewegen des Deckels (3) und das Bewegen des ersten und zweiten Auswurfstößels (26), insbesondere aller Auswurfstößel (26), gleichzeitig und synchron erfolgt, derart, dass die Abdeckplatte (7) gegen die Mikrotiterplatte (5) anliegt, bis die Auswurfstößel (26) die zweite Stellung erreicht haben.

15. Verfahren nach Anspruch 13 oder 14,
wobei das Bewegen des Deckels (3) mittels eines von einer Antriebssteuerung gesteuerten Deckelantriebs (8) der Vorrichtung erfolgt, und wobei der erste und der zweite Stößelantrieb (27) ebenfalls von der Antriebssteuerung gesteuert werden.

## Claims

1. Temperature control block module (23) designed for an apparatus for the thermal treatment of samples, comprising:
a temperature control block (13), at least one temperature control element (24), a heat sink (25) and an ejection mechanism that serves to lift from the temperature control block (13) reaction vessels that have been placed on the temperature control block (13), wherein the ejection mechanism comprises at least a first ejection tappet (26) and a second ejection tappet (26),
wherein the first and the second ejection tappet (26) are mounted in the temperature control block module (23) in such a way that they are perpendicular to a plane in which the temperature control block (13) is arranged and can be moved from a first position, in which they are retracted into the temperature control block module (23), to a second position in which they are extended out of the temperature control block module (23),
wherein the temperature control block module (23) further comprises a first tappet drive (27) which has an operative connection to the first ejection tappet (26) to drive the movement of the first ejection tappet (26) from the first to the second position or from the second to the first position, and wherein the temperature control block module (23) comprises a second tappet drive (27), which is different to the first tappet drive (27) and
which has an operative connection to the second ejection tappet (26) to drive the movement of the second ejection tappet (26) from the first to the second position or from the second to the first position, and
wherein the movements of the first and the second ejection tappet (26) can be driven and controlled independently of one another with a different force, a different speed and/or at different times.

2. Temperature control block module (23) as claimed in Claim 1,
wherein the temperature control block module (23) comprises multiple, for example at least four, ejection tappets (26), which can be moved between the first and the second position, and wherein the temperature control block module (23) has a tappet drive (27) for each ejection tappet (26), in such a way that each tappet drive (27) has an operative connection to one of the ejection tappets (26) to drive the movement of the ejection tappet (26) from the first to the second position and from the second to the first position.

3. Temperature control block module (23) as claimed in Claim 1 or 2,
wherein the ejection tappets (26) are arranged on a periphery of the temperature control block (13), particularly at corners of a cross-section of the temperature control block (13).

4. Temperature control block module (23) as claimed in Claim 1,
wherein all the ejection tappets (26) are mounted on the heat sink (25), directly or indirectly, via one or more additional components.

5. Apparatus (1) designed for the thermal treatment of samples, comprising:
a base unit (2) which has a reception area (4) to receive one or more reaction vessels; a temperature control block module (23) arranged in the base unit as claimed in one of the Claims 1 to 4; and
a cover (3) to close the reception area (4), wherein said cover (3) can be moved from a first open position to a second closed position, wherein the cover (3) comprises a cover plate (7) which has a front surface, wherein the front surface is designed to exert a predefined pressure force on the reaction vessels placed on the temperature control block (13) when the cover (3) is in the second position.

6. Apparatus (1) as claimed in Claim 5, further comprising
at least one connection element (6) connected to the cover (3); and
a cover drive (8) arranged in the base unit (2) and coupled to the at least one connection element (6) to drive a movement of the cover (3) from the first to the second position and/or from the second to the first position;
wherein the cover drive (8) is coupled to the at least one connection element (6) in such a way that, during the movement from the first to the second position, the cover (3) with the cover plate (7) is first moved in a first movement section from the first position to a third position in which the front surface of the cover plate (7) extends parallel to the temperature control block (13) and is spaced at a distance from said block, and in such a way that, in a subsequent second movement section, the cover (3) with the cover plate (7) are moved onto the base unit (2) in the direction of a common normal of the front surface and a plane in which the temperature control block (13) is arranged until the cover (3) has reached the second position.

7. Apparatus (1) as claimed in Claim 5 or 6,
wherein the cover drive (8) can be regulated and/or controlled to adjust the contact pressure acting perpendicularly to the front surface of the cover plate (7), wherein said pressure is exerted by the cover drive (8) on the cover (3) and the cover plate (7) via the connection elements (6) during the second movement section.

8. Apparatus (1) as claimed in one of the Claims 5 to 7,
wherein the apparatus (1) comprises a drive controller that is connected or can be connected to all the tappet drives (27) of the temperature control block module (23), which is designed to control the tappet drives (27) independently of one another, particularly on the basis of a specification by a user or a higher-level controller connected to the drive controller.

9. Apparatus (1) as claimed in Claim 8,
wherein the cover drive (8) has a motor (14), particularly an electric motor, and wherein the drive controller is designed to regulate the force which the cover drive (8) exerts on the cover (3) and the cover plate (7) via the at least one connection element (6), particularly on the basis of a specification by a user or a higher-level controller connected to the drive controller.

10. Apparatus (1) as claimed in Claim 8 or 9,
wherein the drive controller is designed to control the tappet drives (27) in a first operating mode in such a way that the ejection tappets (26) are moved to the second position and/or moved back to the first position at different times.

11. Apparatus (1) as claimed in one of the Claims 8 to 10,
wherein the drive controller is designed to drive the tappet drives (27) in a second operating mode in such a way that the ejection tappets (26) are moved to the first and/or the second position in a synchronized manner.

12. Apparatus (1) as claimed in one of the Claims 8 to 11,
wherein the drive controller is designed to control the cover drive (8) and the tappet drives (27) in a manner in which they are harmonized with one another such that, when the cover (3) moves from the second position to the first position, the ejection tappets (26) are moved in a synchronized or consecutive manner from their first position to their second position.

13. Procedure designed for the removal of a microtiter plate (5) placed on a temperature control block (13) and comprising multiple reaction vessels of an apparatus (1) designed for the thermal treatment of samples, wherein the temperature control block (13) is an integral part of a temperature control block module (23), wherein said temperature control block module (23) comprises a temperature control block (13), at least a temperature control element (24), a heat sink (25) and an ejection mechanism,
and wherein the temperature control block module (23) is arranged in a base unit (2) of the apparatus (1),
wherein said procedure comprises the following steps:
Movement of a cover (3) closing the base unit (2) with a cover plate (7) along a first movement section from a closed position, in which a front surface of the cover plate (7) exerts a pressure force on the microtiter plate (5), to an intermediary position in which the front surface of the cover plate (7) is parallel to the microtiter plate (5), and spaced at a distance from it;
Followed by the movement of the cover (3) to an open position; and
The movement at least of a first and a second ejection tappet (26), which are mounted in a mobile manner in the temperature control block module (23) perpendicularly to a plane in which the temperature control block (13) is arranged, from a first position, in which it is retracted into the temperature control block module (23), to a second position, in which it is extended from the temperature control block module (23), by means of a first tappet drive (27) that moves the first ejection tappet (26) and by means of a second tappet drive (27) that moves the second ejection tappet (26), wherein the first and the second ejection tappet (26) hit an edge of the microtiter plate (5) during the movement and lift the microtiter plate (5) from the temperature control block (23), and
wherein the movements of the first and of the second ejection tappet (26) can be driven and controlled independently of one another with a different force, a different speed and/or at different times.

14. Procedure as claimed in Claim 13,
wherein the movement of the cover (3) and the movement of the first and second ejection tappet (26), particularly of all the ejection tappets (26), are performed simultaneously and in a synchronized manner, in such a way that the cover plate (7) rests against the microtiter plate (5) until the ejection tappets (26) have reached the second position.

15. Procedure as claimed in Claim 13 or 14,
wherein the cover (3) is moved by means of a cover drive (8) of the apparatus controlled by a drive controller, and
wherein the first and the second tappet drive (27) are also controlled by the drive controller.

## Revendications

1. Module bloc de régulation de température (23) destiné à un dispositif de traitement thermique d'échantillons, comprenant :
un bloc de régulation de température (13), au moins un élément de régulation de température (24), un dissipateur thermique (25) et un mécanisme d'éjection qui sert à soulever du bloc de régulation de température (13) les récipients de réaction placés sur le bloc de régulation de température (13),
le mécanisme d'éjection comprenant au moins un premier poussoir d'éjection (26) et un second poussoir d'éjection (26),
le premier et le deuxième poussoir d'éjection (26) étant montés dans le module bloc de régulation de température (23) de telle sorte qu'ils puissent se déplacer perpendiculairement à un plan dans lequel le bloc de régulation de température (13) est disposé, d'une première position, dans laquelle ils sont rétractés dans le module bloc de régulation de température (23), à une deuxième position, dans laquelle ils sont sortis du module bloc de régulation de température (23),
le module bloc de régulation de température (23) comprenant en outre un premier entraînement de poussoir (27) qui est en liaison active avec le premier poussoir d'éjection (26) pour entraîner le mouvement du premier poussoir d'éjection (26) de la première à la seconde position ou de la seconde à la première position, et le module bloc de régulation de température (23) comprenant un second entraînement de poussoir (27), qui est différent du premier entraînement de poussoir (27) et qui est en liaison active avec le second poussoir d'éjection (26) pour entraîner le mouvement du second poussoir d'éjection (26) de la première à la seconde position ou de la seconde à la première position, et
les mouvements du premier et du second poussoir d'éjection (26) pouvant être entraînés et commandés indépendamment l'un de l'autre avec une force différente, une vitesse différente et/ou à des moments différents.

2. Module bloc de régulation de température (23) selon la revendication 1,
le module bloc de régulation de température (23) comprenant plusieurs, par exemple au moins quatre, poussoirs d'éjection (26), qui sont mobiles entre la première et la seconde position, et le module bloc de régulation de température (23) comportant un entraînement de poussoir (27) pour chaque poussoir d'éjection (26), de telle sorte que chaque entraînement de poussoir (27) est en liaison active avec l'un des poussoirs d'éjection (26) pour entraîner le mouvement du poussoir d'éjection (26) de la première à la seconde position et de la seconde à la première position.

3. Module bloc de régulation de température (23) selon la revendication 1 ou 2,
pour lequel les poussoirs d'éjection (26) sont disposés à la périphérie du bloc de régulation de température (13), notamment aux angles d'une section transversale du bloc de régulation de température (13).

4. Module bloc de régulation de température (23) selon la revendication 1,
pour lequel tous les poussoirs d'éjection (26) sont montés sur le dissipateur thermique (25), directement ou indirectement via un ou plusieurs autres composants.

5. Dispositif (1) destiné au traitement thermique d'échantillons, comprenant :
une unité de base (2) présentant une zone de réception (4) pour recevoir un ou plusieurs récipients de réaction ;
un module bloc de régulation de température (23) disposé dans l'unité de base selon l'une des revendications 1 à 4 ; et
un couvercle (3) pour fermer la zone de réception (4), le couvercle (3) étant mobile d'une première position ouverte à une seconde position fermée, le couvercle (3) comprenant une plaque de couverture (7) présentant une surface avant, la surface avant étant conçue pour exercer une force de pression prédéfinie contre les récipients de réaction placés sur le bloc de régulation de température (13) lorsque le couvercle (3) est dans la seconde position.

6. Dispositif (1) selon la revendication 5, comprenant en outre
au moins un élément de liaison (6) relié avec le couvercle (3) ; et
un entraînement de couvercle (8) disposé dans l'unité de base (2) et couplé à l'au moins un élément de liaison (6) pour entraîner un mouvement du couvercle (3) de la première à la seconde position et/ou de la seconde à la première position ;
l'entraînement de couvercle (8) étant couplé à l'au moins un élément de liaison (6) de telle sorte que le couvercle (3) avec la plaque de couverture (7), pendant le mouvement de la première à la deuxième position, est d'abord amené dans une première section de mouvement de la première position à une troisième position dans laquelle la surface avant de la plaque de couverture (7) s'étend parallèlement au bloc de régulation de température (13) et est espacée de celui-ci, et de telle sorte que le couvercle (3) et la plaque de couverture (7) sont déplacés dans une deuxième section de mouvement consécutive vers l'unité de base (2) dans la direction d'une normale commune de la surface avant et d'un plan dans lequel le bloc de régulation de température (13) est disposé, jusqu'à ce que le couvercle (3) ait atteint la deuxième position.

7. Dispositif (1) selon la revendication 5 ou 6,
pour lequel l'entraînement de couvercle (8) peut être réglé et/ou commandé pour ajuster la pression de contact agissant perpendiculairement à la surface avant de la plaque de couverture (7), pression que l'entraînement de couvercle (8) exerce sur le couvercle (3) et la plaque de couverture (7) par l'intermédiaire des éléments de liaison (6) pendant la deuxième section de mouvement.

8. Dispositif (1) selon l'une des revendications 5 à 7,
le dispositif (1) comprenant une commande d'entraînement qui est reliée ou peut être reliée à tous les entraînements de poussoir (27) du module bloc de régulation de température (23), laquelle commande est conçue pour commander les entraînements de poussoir (27) indépendamment les uns des autres, notamment sur la base d'une spécification par un utilisateur ou par une commande de niveau supérieur reliée avec la commande d'entraînement.

9. Dispositif (1) selon la revendication 8,
pour lequel l'entraînement de couvercle (8) comporte un moteur (14), notamment un moteur électrique, et
pour lequel la commande d'entraînement est conçue pour régler la force que l'entraînement de couvercle (8) exerce sur le couvercle (3) et la plaque de couverture (7) par l'intermédiaire de l'au moins un élément de liaison (6), notamment sur la base d'une spécification d'un utilisateur ou d'une commande de niveau supérieur reliée avec la commande d'entraînement.

10. Dispositif (1) selon la revendication 8 ou 9,
pour lequel la commande d'entraînement est conçue pour commander les entraînements de poussoir (27) dans un premier mode de fonctionnement, de telle sorte que les poussoirs d'éjection (26) sont déplacés dans la deuxième position et/ou ramenés dans la première position à des moments différents.

11. Dispositif (1) selon l'une des revendications 8 à 10,
pour lequel la commande d'entraînement est conçue pour entraîner les entraînements de poussoir (27) dans un deuxième mode de fonctionnement, de telle sorte que les poussoirs d'éjection (26) sont déplacés de manière synchrone dans la première et/ou dans la deuxième position.

12. Dispositif (1) selon l'une des revendications 8 à 11,
pour lequel la commande d'entraînement est conçue pour commander l'entraînement de couvercle (8) et les entraînements de poussoir (27) en coordination les uns avec les autres de telle sorte que, lors d'un mouvement du couvercle (3) de la deuxième position vers la première position, les poussoirs d'éjection (26) sont déplacés de manière synchrone ou successive de leur première vers leur deuxième position.

13. Procédé destiné au retrait d'une plaque microtitre (5) placée sur un bloc de régulation de température (13) et comprenant une pluralité de récipients de réaction d'un dispositif (1) destiné au traitement thermique d'échantillons, le bloc de régulation de température (13) faisant partie intégrante d'un composant d'un module bloc de régulation de température (23), lequel module bloc de régulation de température (23) comprend un bloc de régulation de température (13), au moins un élément de régulation de température (24), un dissipateur thermique (25) et un mécanisme d'éjection,
et le module bloc de régulation de température (23) étant disposé dans une unité de base (2) du dispositif (1),
lequel procédé comprend les étapes suivantes :
Déplacement d'un couvercle (3) fermant l'unité de base (2) avec une plaque de couverture (7) le long d'une première section de mouvement d'une position fermée, dans laquelle une surface avant de la plaque de couverture (7) exerce une force de pression contre la plaque microtitre (5), à une position intermédiaire, dans laquelle la surface avant de la plaque de couverture (7) est parallèle à la plaque microtitre (5), et espacée de celle-ci ;
Déplacement consécutif du couvercle (3) vers une position ouverte ; et
Déplacement au moins d'un premier et d'un deuxième poussoir d'éjection (26), qui sont montés de manière mobile dans le module bloc de régulation de température (23) perpendiculairement à un plan dans lequel le bloc de régulation de température (13) est disposé, d'une première position, dans laquelle ils sont rétractés dans le module bloc de régulation de température (23), vers une deuxième position, dans laquelle ils sont sortis du module bloc de régulation de température (23), au moyen d'un premier entraînement de poussoir (27) déplaçant le premier poussoir d'éjection (26) et au moyen d'un deuxième entraînement de poussoir (27) déplaçant le deuxième poussoir d'éjection (26),
le premier et le deuxième poussoir d'éjection (26) butant contre un bord de la plaque microtitre (5) pendant le mouvement et soulevant la plaque microtitre (5) du bloc de régulation de température (23), et
les mouvements du premier et du deuxième poussoir d'éjection (26) pouvant être entraînés et commandés indépendamment l'un de l'autre avec une force différente, une vitesse différente et/ou à des moments différents.

14. Procédé selon la revendication 13,
pour lequel le mouvement du couvercle (3) et le mouvement du premier et du deuxième poussoir d'éjection (26), notamment de tous les poussoirs d'éjection (26), sont effectués simultanément et de manière synchrone, de telle sorte que la plaque de couverture (7) repose contre la plaque microtitre (5) jusqu'à ce que les poussoirs d'éjection (26) aient atteint la deuxième position.

15. Procédé selon la revendication 13 ou 14,
pour lequel le mouvement du couvercle (3) est effectué au moyen d'un entraînement de couvercle (8) du dispositif commandé par une commande d'entraînement, et
pour lequel le premier et le second entraînement de poussoir (27) sont également commandés par la commande d'entraînement.
